(19) Europäisches Patentamt
European Patent Office
Office européen des brevets

(11) **EP 3 035 143 B1**

(12) **FASCICULE DE BREVET EUROPEEN**

(45) Date de publication et mention
de la délivrance du brevet:
**15.03.2017  Bulletin 2017/11**

(51) Int Cl.:
***G05D 1/10*** *(2006.01)*          ***G05D 1/08*** *(2006.01)*
***G05D 1/02*** *(2006.01)*          ***G01P 5/00*** *(2006.01)*
***B64C 27/57*** *(2006.01)*

(21) Numéro de dépôt: **15198678.3**

(22) Date de dépôt: **09.12.2015**

(54) **PROCÉDÉ ET SYSTÈME DE DÉTERMINATION D'UNE CONSIGNE DE VITESSE ANGULAIRE EN VIRAGE POUR UN AÉRONEF A VOILURE TOURNANTE**

VERFAHREN UND SYSTEM ZUR BESTIMMUNG EINES SOLLWERTS FÜR DIE WINKELGESCHWINDIGKEIT BEIM KURVENFLIEGEN FÜR EIN DREHFLÜGELFLUGZEUG

A METHOD AND A SYSTEM FOR DETERMINING AN ANGULAR VELOCITY TARGET IN TURNS FOR A ROTARY WING AIRCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2014  FR 1402910**

(43) Date de publication de la demande:
**22.06.2016  Bulletin 2016/25**

(73) Titulaire: **Airbus Helicopters**
**13725 Marignane Cedex (FR)**

(72) Inventeur: **SALESSE-LAVERGNE, Marc**
**13190 Allauch (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**WO-A1-93/05460          WO-A2-2012/134447**
**US-A1- 2012 253 558**

**Description**

La présente invention est du domaine des systèmes de commande de vol des aéronefs à voilures tournantes et plus particulièrement de l'assistance à la réalisation d'un vol en virage.

La présente invention concerne un procédé de détermination d'une vitesse angulaire en virage pour un aéronef à voilure tournante et plus particulièrement un procédé permettant la détermination d'une vitesse angulaire en virage coordonné par rapport au sol ou à l'air ainsi qu'en transition entre une coordination sol et une coordination air, tout en prenant en compte un fort vent latéral subi par l'aéronef. La présente invention concerne également un système de détermination d'une telle vitesse angulaire en virage pour un aéronef à voilure tournante.

Les aéronefs à voilures tournantes sont des appareils volants qui se distinguent principalement des autres aéronefs motorisés par leur capacité à évoluer aussi bien en vol de croisière à vitesses élevées qu'en vol à basses vitesses ou en vol stationnaire. Une telle capacité est procurée par l'exploitation d'au moins un rotor principal à axe de rotation sensiblement vertical équipant l'aéronef.

Ce rotor principal constitue une voilure tournante procurant la sustentation, voire aussi la propulsion de l'aéronef. Le comportement de l'aéronef à voilure tournante en vol peut être modifié à partir d'une variation du pas cyclique et/ou du pas collectif des pales de la voilure tournante. Une variation du pas cyclique des pales induit une modification du comportement de l'aéronef en assiette, et plus particulièrement en tangage et/ou en roulis. Une variation du pas collectif des pales induit une modification du comportement de l'aéronef en sustentation, pouvant générer des déplacements particulièrement suivant un axe sensiblement vertical, mais également suivant ses axes de tangage et de roulis selon l'assiette de l'aéronef.

L'aéronef à voilure tournante est aussi manoeuvrable en lacet sur lui-même, à partir de l'exploitation d'un dispositif anticouple en lacet. Par exemple, un tel dispositif anticouple est formé d'un rotor de queue à axe de rotation sensiblement horizontal situé à l'arrière de l'aéronef. Un tel rotor arrière comporte plusieurs pales dont généralement uniquement le pas collectif est variable bien que le pas cyclique puisse également être variable.

Un aéronef à voilure tournante comporte généralement un seul rotor principal et un rotor arrière anticouple. Cependant, un aéronef à voilure tournante peut également comporter deux rotors principaux contrarotatifs, par exemple en tandem ou bien coaxiaux, aucun dispositif anticouple n'étant alors nécessaire.

De plus, un hélicoptère hybride est un aéronef à voilure tournante comportant au moins un rotor principal, procurant principalement sa sustentation et à moindres mesures sa propulsion, et au moins un moyen de propulsion spécifique tel qu'une hélice propulsive. Un tel hélicoptère hybride permet de couvrir de grandes distances et d'évoluer avec une vitesse d'avancement élevée. Le dispositif anticouple de cet hélicoptère hybride peut être formé par l'une au moins des hélices propulsives. Une telle hélice propulsive comporte plusieurs pales dont généralement uniquement le pas collectif est variable.

En outre, un aéronef à voilure tournante peut comporter des éléments aérodynamiques tels que des empennages, voire des ailes dans le cas des hélicoptères hybrides notamment. Ces éléments aérodynamiques peuvent comporter des parties mobiles et participent à la manoeuvrabilité de l'aéronef et notamment lors de vol de croisière à des vitesses d'avancement élevées.

Une variation du comportement en vol de l'aéronef à voilure tournante peut alors être réalisée à partir d'une modification de différents paramètres de vol de l'aéronef. Ces différents paramètres de vol concernent notamment les valeurs de pas cyclique et/ou collectif des rotors principaux ainsi que la valeur de pas collectif du rotor anticouple et/ou des moyens de propulsion et les éventuels éléments aérodynamiques. Une telle modification de ces paramètres de vol est susceptible d'être réalisée selon divers modes de commande.

Selon un mode manuel de commande, le pilote de l'aéronef à voilure tournante dispose de leviers de commande entraînés manuellement par ce pilote de l'aéronef pour opérer une variation de ces paramètres de vol et notamment des pas cyclique et/ou collectif des pales des différents rotors par l'intermédiaire de chaînes cinématiques de commande manuelle. La notion de manuelle est à considérer en opposition à la notion d'automatique, sans préjuger du moyen utilisé par l'homme pour manoeuvrer l'aéronef, palonnier, manette ou manche notamment.

Suivant une forme de réalisation d'un mode manuel de commande, les leviers de commande sont en prise sur des chaînes respectives à transmission mécanique distante d'efforts, permettant au pilote de l'aéronef à voilure tournante de manoeuvrer mécaniquement les pales à partir des leviers de commande, soit directement, soit par l'intermédiaire de servocommandes.

Suivant une autre forme de réalisation d'un mode manuel de commande, un entraînement d'un levier de commande par le pilote est générateur de signaux électriques d'activation d'au moins une servocommande de manoeuvre des pales.

Selon un mode automatisé de commande, un pilote automatique est générateur d'ordres de commande de ces paramètres de vol et notamment d'une variation du pas des pales des différents rotors par l'intermédiaire de chaînes cinématiques de commande automatisée. Lorsque le pilote automatique est activé, les ordres de commande se substituent aux ordres de commande générés par le pilote directement à partir des leviers de commande pour activer les servocommandes.

Le pilote automatique permet de maintenir une progression stable de l'aéronef à voilure tournante selon des consignes de vol préalablement mémorisées. Un état effectif de progression de l'aéronef est évalué par le pilote automatique à un instant donné au regard de diverses informations fournies par l'instrumentation de bord de l'aéronef. A partir d'une différence détectée par le pilote automatique entre les consignes de vol et l'état effectif de progression de l'aéronef, le pilote automatique intervient sur le comportement en vol de l'aéronef à voilure tournante par l'intermédiaire d'un ou plusieurs paramètres de vol pour rétablir son état effectif de progression conformément aux consignes de vol.

L'activation du pilote automatique est commandée par le pilote de l'aéronef à voilure tournante à partir d'un ou de plusieurs boutons de commande spécifiques.

Selon un mode de stabilisation mis en oeuvre par le pilote automatique, une consigne initiale de tenue d'assiette de l'aéronef à voilure tournante est par exemple définie au regard de l'état de progression de l'aéronef évalué à partir de l'activation du pilote automatique. Le mode de stabilisation procure une stabilisation de l'aéronef par correction d'assiette de l'aéronef au moyen du pilote automatique par rapport à la consigne initiale.

Selon un mode particulier de pilotage par transparence, le pilote peut éventuellement intervenir temporairement sur le comportement de l'aéronef par l'intermédiaire des leviers de commande, en surpassant les ordres de commande générés par le pilote automatique. Les consignes initiales de vol sont figées, une éventuelle intervention temporaire du pilote sur le comportement de l'aéronef n'induisant pas de modification des consignes initiales de vol.

Il est par ailleurs connu de corriger une consigne de vol telle une consigne de tenue d'assiette en fonction de l'état de progression effective de l'aéronef à voilure tournante à l'issue d'une action du pilote sur les leviers de commande. Il est encore connu de permettre au pilote de l'aéronef de corriger une consigne de tenue d'assiette en faisant varier la valeur de cette consigne par incrémentation, par l'intermédiaire d'un ou plusieurs organes de commande dédiés. Par exemple, deux organes de commande désignés généralement par le terme anglais « beep » sont utilisés. Par exemple, de tels organes de commande peuvent être positionnés respectivement sur un levier de commande de pas collectif généralement appelé « manche » et un levier de commande de pas cyclique.

Le document FR1347243 décrit un dispositif de pilotage par transparence permettant une action du pilote avec soit un retour aux consignes initiales de vol après arrêt de l'action du pilote et soit un enregistrement de nouvelles consignes de vol prenant en compte cette action du pilote.

On connait également le document FR2991664 qui décrit un système automatisé d'assistance au pilotage permettant de tenir un paramètre de vol sur un axe de progression de l'aéronef tout en prenant en compte l'action du pilote de l'aéronef sur au moins un autre axe par l'intermédiaire de leviers de commande de vol lors du fonctionnement du pilote automatique de l'aéronef. Différents modes de guidage sont susceptibles d'être sélectionnés par le pilote privilégiant par exemple une tenue en vitesse verticale ou d'avancement ou bien une tenue de cap, d'incidence ou de pente.

De plus, le document US5001646 décrit un système de commande automatisé permettant au pilote d'agir sur la progression de l'aéronef par l'intermédiaire d'un organe de commande muni de quatre axes. Le pilote peut alors commander les accélérations longitudinale, latérale et verticale de l'aéronef ainsi que sa vitesse angulaire en lacet tout en conservant d'une part, à basse vitesse d'avancement, une vitesse par rapport au sol indépendamment du cap suivi et d'autre part, à grande vitesse d'avancement, un virage coordonné et une pente.

La stabilisation de l'aéronef à voilure tournante est procurée à partir de modes de base, selon lesquels le pilote automatique est par exemple générateur d'une augmentation de stabilité par amortissement des mouvements angulaires de l'aéronef, ou encore de tenue d'assiettes ou de cap. Les modes de base procurent un confort de pilotage pour le pilote de l'aéronef à voilure tournante, mais ne corrigent pas d'éventuels écarts par rapport à la vitesse ou la position de l'aéronef désirées par le pilote. Il a donc été proposé d'associer aux modes de base des modes supérieurs de fonctionnement pour annuler d'éventuels écarts de position, de vitesse et/ou d'accélération de l'aéronef par rapport aux valeurs désirées par le pilote. Ces valeurs désirées sont entrées sous forme de consignes de vol que les modes supérieurs du pilote automatique utilisent pour amener et maintenir l'aéronef sur la position, la vitesse et/ou l'accélération désirées. L'opération de stabilisation de l'aéronef procurée par les modes de base est effectuée rapidement par le pilote automatique, tandis que l'opération de rétablissement de la position, de la vitesse et/ou de l'accélération de l'aéronef à voilure tournante est ensuite effectuée plus lentement par les modes supérieurs.

On connait par exemple le document WO95/34029 qui décrit un système de commande de vol d'un aéronef permettant de stabiliser les vitesses de l'aéronef en contrôlant les commandes selon les axes de lacet, roulis et tangage ainsi que la portance tout en conservant un cap constant.

Le pilote automatique est encore susceptible de procurer des fonctions avancées d'assistance au guidage de l'aéronef à voilure tournante. Les potentialités offertes par les modes supérieurs sont accessoirement exploitées pour procurer une telle assistance. Les modalités d'exécution des fonctions avancées relèvent de fonctionnalités prédéfinies du pilote automatique, au regard d'une trajectoire de consigne que doit suivre l'aéronef.

De fait, le fonctionnement de tels modes supérieurs de pilotage automatique est conçu pour des opérations IFR désignant en langue anglaise « Instruments Flight Rules », c'est-à-dire pour un pilotage pouvant être effectué uniquement à l'aide des instruments de vol et pouvant alors être réalisé avec une vision extérieure de l'aéronef dégradée, voire aucune vision extérieure.

Par opposition, un pilotage à vue est réalisé selon des opérations VFR désignant en langue anglaise « Visual Flight Rules ». L'expression en langue anglaise « pilotage eyes-out » est également utilisée et signifie que le pilote effectue un pilotage de l'aéronef en regardant à l'extérieur de l'aéronef et non uniquement à l'aide des instruments et assistance de vol.

La trajectoire de consigne est par exemple exploitée au regard d'une mission de vol préalablement déterminée par le pilote de l'aéronef à voilure tournante ou bien en phase d'approche d'un site connu et repéré. Un tel site est notamment équipé de moyens procurant une interactivité entre le site et le pilote automatique, tels que des balises de radionavigation. En l'absence de tels équipements interactifs, le repérage du site est effectué par le pilote de l'aéronef en mode manuel, puis, le pilote de l'aéronef active la fonction avancée souhaitée.

Les modalités de fonctionnement du pilote automatique permettent une assistance automatisée du pilotage en correction d'assiette de l'aéronef à voilure tournante en phase de vol de croisière, à vitesses d'avancement élevées et à une position de l'aéronef éloignée du sol. En phase de vol de croisière, l'environnement de l'aéronef est normalement dégagé et le pilote de l'aéronef est dispensé d'une intervention soutenue sur la manoeuvre de l'aéronef. Une telle dispense d'intervention soutenue est aussi susceptible d'être procurée à proximité du sol en environnement connu par la mise en oeuvre d'une fonction avancée du pilote automatique, tel que pour une phase d'approche d'une piste d'atterrissage connue et/ou équipée de moyens de repérage de son environnement.

De même, lors d'une phase d'approche d'un site d'intervention, y compris à basses vitesses, parfaitement connu, identifié et repéré par le pilote automatique, l'activation d'une fonction avancée est rendue possible pour guider l'aéronef à voilure tournante suivant la trajectoire de consigne correspondante.

En outre, le pilote automatique commande, comme un homme pilotant l'aéronef, traditionnellement les vitesses longitudinale, latérale et verticale de l'aéronef respectivement par le pas cyclique longitudinal, le pas cyclique latéral et le pas collectif du rotor principal, le pas collectif d'un rotor anticouple pilotant l'orientation de l'aéronef autour de son axe de lacet. Ces vitesses longitudinale, latérale et verticale sont définies dans un repère lié à l'aéronef dont les axes sont formés par les directions longitudinale, latérale et verticale de l'aéronef.

Par ailleurs, un pilote automatique peut également permettre à l'aéronef de réaliser des virages coordonnés. Un virage coordonné est un virage réalisé sans dérive de l'aéronef vis-à-vis de la trajectoire du virage par rapport au sol, il s'agit alors d'une coordination sol, ou bien sans facteur de charge latéral, il s'agit alors d'une coordination air.

Dans le cas d'une coordination sol, un virage est coordonné par rapport au sol. L'aéronef n'a pas de dérive vis-à-vis du sol, permet ainsi de suivre avec précision une trajectoire au sol. Un tel virage coordonné par rapport au sol est utilisé de préférence à faible vitesse et basse altitude afin de se déplacer en sécurité à proximité du relief ou de bâtiments, le nez de l'aéronef restant généralement aligné sur la trajectoire au sol.

Dans le cas d'une coordination air, un virage est coordonné par rapport à l'air. L'aéronef n'a pas de dérive vis-à-vis de l'air et privilégiant ainsi le confort des occupants et minimisant le dérapage de l'aéronef. Un tel virage coordonné par rapport à l'air est utilisé de préférence en vol de croisière, c'est-à-dire à haute vitesse et haute altitude et loin de tout obstacle.

On connait le document US5213283 qui décrit un système de commande permettant de réaliser un virage coordonné. Ce système de commande fournit automatiquement une commande de pilotage en lacet en réponse à une commande de pilotage en roulis du pilote de l'aéronef lors de la réalisation d'un tel virage coordonné, la charge du pilote étant ainsi réduite.

En outre, le document WO2012/134447 décrit un système de commande de vol d'un aéronef permettant de réaliser un virage coordonné dans l'ensemble du domaine de vol, en minimisant la charge de travail du pilote. Ce système de commande utilise à haute vitesse d'une part des changements d'inclinaison de l'aéronef pour piloter le cap ainsi qu'une accélération latérale et d'autre part la vitesse par rapport à l'air de l'aéronef pour piloter le cap, réalisant un virage coordonné par rapport à l'air. A basse vitesse, le système de commande utilise l'angle de dérapage de l'aéronef pour maintenir le cap aligné sur la trajectoire de l'aéronef, réalisant ainsi un virage coordonné par rapport au sol. Dans une zone de transition entre ces deux domaines de vol, l'angle de dérapage de l'aéronef et son accélération latérale sont utilisés pour maintenir l'aéronef en virage coordonné.

Par ailleurs, les aéronefs à voilures tournantes sont des aéronefs motorisés prévus pour pouvoir évoluer dans des conditions variées et parfois difficiles, tant au niveau des conditions atmosphériques, telles que la présence d'un vent violent et de conditions de visibilité variables, qu'au niveau des conditions de vol, telles qu'à basses vitesses ou en vol stationnaire, ou encore de l'environnement, tel que proches d'un quelconque sol inconnu ou mal connu.

Dans des conditions de vol difficiles, des facteurs inattendus sont susceptibles de devoir être pris en compte par le pilote de l'aéronef à voilure tournante. L'exploitation par le pilote de l'aéronef d'une assistance automatisée à la manoeuvre de l'aéronef dans de telles conditions de vol difficiles est donc délicate, voire impossible. Par exemple lorsque l'aéronef est proche du sol, une éventuelle modification de son comportement doit être rapidement opérée. Les modalités de fonctionnement du pilote automatique ne permettent que difficilement une modification rapide d'une trajectoire à suivre par l'aéronef au moyen de l'exploitation d'une fonction avancée mettant en oeuvre les modes supérieurs de fonctionnement du pilote automatique.

De fait, lors de telles conditions de vol difficiles, l'utilisation d'un pilotage IFR peut être dangereuse et un pilotage à vue est à privilégier, le pilote pouvant cependant utiliser certains instruments et/ou assistance de l'aéronef. On parle notamment de conditions de vol à vue en conditions VMC correspondant à l'acronyme désignant en langue anglaise « Visual Meteorological Conditions » ou en conditions de visibilité dégradée DVE correspondant à l'acronyme désignant en langue anglaise « Degraded Visual Environment ». Le pilote peut alors avoir besoin d'ajuster fréquemment la vitesse et/ou la trajectoire de l'aéronef afin d'éviter d'éventuels obstacles et de se rapprocher de ses objectifs, par exemple en cas de fort vent latéral.

Le document FR2777535 décrit un système de commande de vol d'un aéronef permettant notamment de contrôler la vitesse latérale par rapport au sol en gardant un cap constant afin de compenser par exemple un fort vent latéral. Ce système de commande permet également de maintenir la direction de la vitesse de l'aéronef, et donc sa trajectoire, constante lors d'une modification de son cap et/ou de sa vitesse longitudinale.

Par ailleurs, on connait le document WO2012/134460 qui décrit un système de commande de vol d'un aéronef permettant de conserver une trajectoire constante par rapport au sol lors d'une rotation de cap à basse vitesse. Le système de commande agit sur les commandes en tangage et roulis afin de maintenir cette trajectoire, le pilote pouvant engager une rotation de l'aéronef à tout moment par l'intermédiaire de ces commandes.

De même, le document WO2012/096668 décrit un système de commande de vol d'un aéronef permettant de contrôler la vitesse verticale de l'aéronef, sa pente par rapport au sol et/ou une hauteur par rapport au sol selon sa vitesse d'avancement. En-dessous d'un seuil de vitesse d'avancement prédéterminé, correspondant à une situation de vol proche d'un vol stationnaire, le système de commande de vol permet de tenir une hauteur par rapport au sol. Au-dessus de ce seuil de vitesse d'avancement prédéterminé, le système de commande de vol permet alors de tenir une vitesse verticale de l'aéronef ou bien une pente par rapport au sol.

De plus, le document FR2814433 décrit un dispositif de commande de vol d'un aéronef dont une action sur un organe de commande peut avoir différents effets suivant la vitesse de translation de l'aéronef. Ainsi, si cette vitesse de translation de l'aéronef est inférieure ou égale à un seuil prédéterminé, une action sur cet organe de commande agit directement sur cette vitesse de translation. Par contre, si cette vitesse de translation de l'aéronef est supérieure à ce seuil prédéterminé, une action sur cet organe de commande agit par exemple, sur l'accélération en translation de l'aéronef ou bien sur sa vitesse angulaire.

Enfin, le document WO2013/012408 décrit un système de commande de vol d'un aéronef permettant de réaliser de façon automatique des mises en vol stationnaire de l'aéronef à partir d'un vol d'avancement ainsi qu'une tenue en position en vol stationnaire.

La présente invention a alors pour objet un procédé de détermination d'une vitesse angulaire en virage pour un aéronef à voilure tournante ainsi qu'un système de détermination d'une telle vitesse angulaire en virage permettant de réaliser un virage coordonné par rapport au sol ou à l'air ainsi que dans une zone de transition entre une coordination sol et une coordination air tout en s'affranchissant des limitations mentionnées ci-dessus.

Selon l'invention, un procédé de détermination d'une vitesse angulaire en virage pour un aéronef à voilure tournante est destiné à un aéronef à voilure tournante comportant au moins un moyen de commande et un pilote automatique générateur d'ordres de commande selon des modes prédéfinis de fonctionnement et selon des consignes de vol. Ces moyens de commande sont par exemple des leviers ou manches de commande et un palonnier, ou encore des organes de commande tels que des « beeps ».

L'aéronef est caractérisé par trois directions privilégiées, une direction longitudinale X s'étendant de l'avant de l'aéronef vers l'arrière de l'aéronef, une direction d'élévation Z s'étendant de bas en haut perpendiculairement à la direction longitudinale X et une direction transversale Y s'étendant de droite à gauche perpendiculairement aux directions longitudinale X et d'élévation Z. La direction longitudinale X est l'axe de roulis de l'aéronef, la direction transversale Y est son axe de tangage et la direction d'élévation Z est son axe de lacet.

L'aéronef comporte au moins une voilure tournante, munie de plusieurs pales principales dont le pas collectif et le pas cyclique sont variables autour d'un axe de pas, permettant à l'aéronef d'effectuer des mouvements de rotation autour de ces directions X,Y,Z et de translation selon les directions X,Y,Z. Les ordres de commande du pilote automatique peuvent provoquer ces mouvements de l'aéronef en rotation et/ou en translation par rapport aux directions X,Y,Z.

L'aéronef évolue généralement selon une trajectoire $T_{sol}$ déterminée par rapport au sol dans le but d'atteindre un objectif au sol tel qu'un terrain d'atterrissage. On considère que l'aéronef évolue selon une trajectoire $T_{sol}$ lorsque son centre de gravité suit cette trajectoire $T_{sol}$. De fait, cette trajectoire $T_{sol}$ est définie dans un repère géographique terrestre, c'est-à-dire fixe par rapport au globe terrestre, dans lequel l'aéronef est mobile. Ce repère géographique terrestre est par exemple formé à partir des points cardinaux, par exemple par les directions du nord et de l'ouest ainsi que par une direction verticale telle que celle de la gravité terrestre.

Un aéronef vole selon cette trajectoire $T_{sol}$ avec une vitesse d'avancement $Va$. La vitesse d'avancement $Va$ de l'aéronef est sa vitesse selon la direction de cette trajectoire $T_{sol}$ et peut être la vitesse d'avancement de l'aéronef par rapport au sol $Va_{sol}$ ou bien la vitesse d'avancement de l'aéronef par rapport à l'air $Va_{air}$

La vitesse d'avancement de l'aéronef par rapport au sol $Va_{sol}$ est utilisée généralement comme vitesse d'avancement $Va$ lors des vols à basses altitudes, c'est-à-dire l'aéronef étant proche d'obstacles tels que le relief et les bâtiments. La vitesse d'avancement de l'aéronef par rapport à l'air $Va_{air}$ est quant à elle utilisée comme vitesse d'avancement $Va$ essentiellement lors des vols de croisière à hautes altitudes, c'est-à-dire l'aéronef étant éloigné de tout obstacle.

Un vol de croisière d'un aéronef selon cette trajectoire $T_{sol}$ est généralement caractérisé par la vitesse d'avancement $Va,$ un angle de route sol $Tk_{sol}$ pris par rapport à la direction du nord, dans un plan horizontal de ce repère géographique terrestre, une pente P donnant l'inclinaison de la trajectoire $T_{sol}$ par rapport à ce plan horizontal de ce repère géographique terrestre et un cap $\psi$.

Le cap $\psi$ de l'aéronef est l'angle formé par la projection dans le plan horizontal du repère terrestre de la direction longitudinale X de l'aéronef et la direction du nord. Ainsi, lorsque le cap $\psi$ et l'angle de route sol $Tk_{sol}$ sont égaux, le nez de l'aéronef pointe sur la trajectoire $T_{sol}$. De la sorte, la direction longitudinale X est alors alignée sur cette trajectoire $T_{sol}$. Dans le cas contraire, le nez de l'aéronef ne se trouve pas sur cette trajectoire $T_{sol}$ et cette trajectoire $T_{sol}$ ne se trouve alors pas alignée sur la direction longitudinale X, un aéronef à voilure tournante ayant la particularité de pouvoir avancer dans toutes les directions indépendamment de sa direction longitudinale X.

Le procédé de détermination d'une vitesse angulaire en virage pour un aéronef à voilure tournante est remarquable en ce que :

- on détermine une vitesse longitudinale $V_{Long}$ à utiliser pour déterminer une valeur d'anticipation $A$ d'une vitesse angulaire en lacet $\dot{\psi}$ de l'aéronef à appliquer lors du virage telle que :

  ○ la vitesse longitudinale $V_{Long}$ est égale à une vitesse d'avancement longitudinale de l'aéronef par rapport au sol $(Va_{sol})_{Long}$ telle que $V_{Long} = (Va_{sol})_{Long}$ lorsque la vitesse d'avancement longitudinale de l'aéronef par rapport au sol $(Va_{sol})_{Long}$ est strictement comprise dans un premier intervalle *Int1* centré sur une vitesse d'avancement longitudinale de l'aéronef par rapport à l'air $(Va_{air})_{Long}$ et d'une largeur $D_{int1}$,
  ○ la vitesse longitudinale $V_{Long}$ est égale à une première borne supérieure du premier intervalle *Int1* lorsque la vitesse d'avancement longitudinale de l'aéronef par rapport au sol $(Va_{sol})_{Long}$ est supérieure ou égale à la première borne supérieure, la première borne supérieure étant égale à la vitesse d'avancement longitudinale de l'aéronef par rapport à l'air $(Va_{air})_{Long}$ à laquelle est ajoutée une marge *Offset* égale à la moitié de la largeur $D_{int1}$ du premier intervalle *Int1*,

  telle que $Offset = \frac{D_{int1}}{2}$ et $V_{Long} = (Va_{air})_{Long} + \frac{D_{int1}}{2}$,

  ○ la vitesse longitudinale $V_{Long}$ est égale à une première borne inférieure du premier intervalle *Int1* lorsque la vitesse d'avancement longitudinale de l'aéronef par rapport au sol $(Va_{sol})_{Long}$ est inférieure ou égale à la première borne inférieure, la première borne inférieure étant égale à la vitesse d'avancement longitudinale de l'aéronef par rapport à l'air $(Va_{air})_{Long}$ à laquelle est soustraite la marge *Offset,*

  telle que $V_{Long} = (Va_{air})_{Long} - \frac{D_{int1}}{2}$,

- on détermine la valeur d'anticipation A de la vitesse angulaire en lacet $\dot{\psi}$, telle que $A = \frac{G_Y}{V_{Long}}$, $G_Y$ étant une accélération latérale de l'aéronef commandée par un pilote de l'aéronef,
- on détermine une vitesse latérale $V_{Lat}$ à utiliser pour déterminer une valeur de correction $B$ de la vitesse angulaire en lacet $\dot{\psi}$ à appliquer lors du virage telle que :

  ○ la vitesse latérale $V_{Lat}$ est égale à une vitesse d'avancement latérale de l'aéronef par rapport au sol $(Va_{sol})_{Lat}$ telle que $V_{Lat} = (Va_{sol})_{Lat}$ lorsque la vitesse d'avancement latérale de l'aéronef par rapport au sol $(Va_{sol})_{Lat}$ est strictement comprise dans un second intervalle *Int2* borné d'une part par une seconde borne inférieure du second intervalle *Int2* égale à un premier produit d'un premier coefficient multiplicateur $K_1$ et d'un facteur de charge latéral *Ny* de l'aéronef auquel est soustraite une marge inférieure $Offset_{Lo}$ et d'autre part par une seconde borne supérieure du second intervalle *Int2* égale à ce premier produit du premier coefficient multiplicateur $K_1$ et du facteur de charge latéral *Ny* auquel est ajoutée une marge supérieure $Offset_{Hi}$,
  ○ la vitesse latérale $V_{Lat}$ est égale à la seconde borne supérieure du second intervalle *Int2* lorsque la vitesse d'avancement latérale de l'aéronef par rapport au sol $(Va_{sol})_{Lat}$ est supérieure ou égale à la seconde borne supérieure,

  telle que $Va_{Lat} = K_1 \times Ny + Offset_{Hi}$,

  ○ la vitesse latérale $V_{Lat}$ est égale à la seconde borne inférieure du second intervalle *Int2* lorsque la vitesse d'avancement latérale de l'aéronef par rapport au sol $(Va_{sol})_{Lat}$ est inférieure ou égale à la seconde borne inférieure,
telle que $Va_{Lat} = K_1 \times Ny - Offset_{Lo}$,

- on détermine la valeur de correction $B$ de la vitesse angulaire en lacet $\dot{\psi}$, telle que $B = K_2 \times V_{Lat}$, $K_2$ étant un second coefficient multiplicateur, et
- on détermine ladite vitesse angulaire en lacet $\dot{\psi}$ afin de poursuivre ladite trajectoire $T_{sol}$ selon ledit virage,

telle que $\dot{\psi} = A + B$.

On entend par vitesse d'avancement longitudinale de l'aéronef par rapport au sol ou bien à l'air une projection sur la direction longitudinale X de l'aéronef de la vitesse d'avancement de l'aéronef respectivement par rapport au sol ou bien à l'air. De même, on désigne par vitesse d'avancement latérale de l'aéronef par rapport au sol ou bien à l'air une projection sur la direction transversale Y de l'aéronef de la vitesse d'avancement de l'aéronef respectivement par rapport au sol ou bien à l'air.

Un aéronef à voilure tournante comporte au moins une voilure tournante à axe de rotation sensiblement vertical, c'est-à-dire parallèle à la direction d'élévation Z, et peut être construit selon plusieurs architectures. L'aéronef comporte par exemple une seule voilure tournante formée par un rotor principal assurant la sustentation et la propulsion de l'aéronef ainsi qu'un rotor arrière anticouple à axe de rotation sensiblement horizontal, c'est-à-dire parallèle à la direction transversale Y. Ce rotor arrière anticouple permet également des manoeuvres autour de l'axe de lacet.

Selon un autre exemple, l'aéronef comporte deux voilures tournantes formées par deux rotors principaux contrarotatifs qui sont en tandem ou bien coaxiaux. L'aéronef peut également comporter au moins une voilure tournante, tel un rotor principal, assurant principalement la sustentation de l'aéronef et une ou plusieurs hélices propulsives à axes de rotation sensiblement horizontaux, c'est-à-dire parallèles à la direction longitudinale X, assurant sa propulsion. Un tel aéronef constitue alors un hélicoptère hybride.

Par ailleurs, un aéronef à voilure tournante peut comporter des éléments aérodynamiques tels que des empennages ou bien des ailes dans le cas des hélicoptères hybrides notamment. Ces éléments aérodynamiques peuvent comporter des parties mobiles afin de faciliter la manoeuvrabilité de l'aéronef en particulier lors d'un vol de croisière.

Quelle que soit l'architecture de l'aéronef, le pilote de l'aéronef peut modifier le comportement en vol de l'aéronef en agissant sur un ou plusieurs moyens de commande. Par exemple, des leviers ou bien des manches provoquent une variation du pas cyclique et/ou du pas collectif des pales principales. Un palonnier provoque une variation du pas collectif des pales secondaires d'un rotor arrière alors qu'une manette peut provoquer une variation du pas collectif des pales secondaires d'au moins une hélice propulsive. De plus, le pilote de l'aéronef peut également provoquer un déplacement des parties mobiles des éléments aérodynamiques éventuellement présents sur l'aéronef afin de modifier le comportement en vol de l'aéronef.

En outre, le pilote automatique peut également modifier le comportement en vol de l'aéronef, par l'intermédiaire des ordres de commandes qu'il fournit et selon les consignes de vol, en provoquant une variation du pas cyclique et/ou du pas collectif des pales principales, une variation du pas collectif des pales secondaires d'un rotor arrière ou bien d'au moins une hélice propulsive ainsi qu'un déplacement des parties mobiles des éléments aérodynamiques éventuellement présents.

Au cours d'un vol, l'aéronef à voilure tournante est amené à réaliser des virages qui sont traités différemment suivant les conditions de vol et l'environnement.

Notamment, en vol de croisière réalisé à haute vitesse et à hauteur suffisante au-dessus du terrain, donc loin de tout obstacle, le confort des occupants est généralement privilégié. Pour optimiser ce confort, il convient de minimiser le facteur de charge latéral de l'aéronef. Ce choix présente l'avantage de limiter la dérive vis-à-vis de l'air dans la plupart des cas de vol de croisière rapide. Dans les quelques cas de vol où l'annulation du facteur de charge latéral ne suffirait pas à limiter la dérive vis-à-vis de la masse d'air, on peut avec profit chercher à aligner le facteur de charge latéral mesuré sur une valeur estimée de manière à limiter cette dérive vis-à-vis de l'air. C'est pourquoi on assimile ce choix d'un alignement du facteur de charge latéral sur une valeur nulle ou légèrement décalée de manière à limiter la dérive vis-à-vis de l'air à une coordination de virage par rapport à la masse d'air, bien qu'en toute rigueur une telle coordination supposerait la mesure ou l'estimation précise de la vitesse d'avancement latérale de l'aéronef par rapport à l'air et son annulation. Faute de mesurer ou de pouvoir estimer précisément cette vitesse d'avancement latérale de l'aéronef par rapport à l'air, on parle de coordination air pour désigner cet alignement du facteur de charge latéral sur une valeur nulle ou faiblement décalée de manière à limiter la dérive vis-à-vis de l'air. Selon ce principe, on peut choisir de coordonner les virages par rapport à l'air à partir de vitesses d'avancement par rapport à l'air $Va_{air}$ de l'ordre de 30 à 40 noeuds (30 à 40 kt), ce qui est le cas le plus général, ou de remonter ces seuils vers des valeurs pouvant aller jusqu'à typiquement 65 à 75 noeuds (65 à 75 kt).

L'évolution de la projection sur un plan horizontal de la vitesse d'avancement latérale de l'aéronef par rapport à l'air $U_{HY}$ est donnée par l'équation suivante :

$$\dot{U}_{HY} = -\dot{\psi} \cdot U_{HX} + G_{HY}$$

où $U_{HX}$ est la projection sur ce même plan horizontal de la vitesse d'avancement longitudinale de l'aéronef par rapport à l'air $(Va_{air})_{Long}$ et $G_{HY}$ est la projection sur ce même plan horizontal de l'accélération latérale $G_Y$ de l'aéronef. Le choix d'une vitesse angulaire de lacet $\dot{\psi}$, telle que $\dot{\psi} = \frac{G_{HY}}{U_{HX}} + \frac{\omega_0}{U_{HX}} \cdot U_{HY}$, conduit à l'équation différentielle du premier ordre $\dot{U}_{HY} = -\omega_0 \cdot U_{HY}$ convergeant exponentiellement vers 0 pour $\omega_0 > 0$, avec une constante de temps égale à l'inverse de ce coefficient $\omega_0$.

Ce choix de vitesse angulaire de lacet $\dot{\psi}$ assure donc la coordination du virage par rapport à l'air. En utilisant $\frac{G_Y}{(Va_{air})_{Long}} \approx \frac{G_{HY}}{U_{HX}}$, $G_Y$ étant l'accélération latérale de l'aéronef, $(Va_{air})_{Long}$ la vitesse d'avancement longitudinale par rapport à l'air, et en approximant le terme $\frac{\omega_0}{U_{HX}} \cdot U_{HY}$ par le terme $K \times Ny$, $Ny$ étant le facteur de charge latéral de l'aéronef et $K$ un coefficient multiplicateur choisi de manière à restituer un gain variable $\frac{\omega_0}{U_{HX}}$ avec la projection de la vitesse d'avancement latérale de l'aéronef par rapport à l'air et la proportion existant entre $N_Y$ et $U_{HY}$, tel que $K \times N_y \approx \frac{\omega_0}{U_{HX}} \cdot U_{HY}$, on obtient la formule fournissant la vitesse angulaire en lacet $\dot{\psi}$ de l'aéronef suivante :

$$\dot{\psi} = \frac{G_Y}{(Va_{air})_{Long}} + K \times Ny.$$

En revanche, afin de suivre avec précision une trajectoire au sol, le virage doit être coordonné par rapport au sol. Dans le cas d'une telle coordination sol, l'aéronef ne doit pas dériver vis-à-vis du sol ce qui signifie que la vitesse latérale de l'aéronef par rapport au sol doit être constante, et de préférence nulle. Le cap $\psi$ de l'aéronef est alors généralement aligné sur la trajectoire $T_{sol}$ au sol. Un tel virage coordonné par rapport au sol est utilisé de préférence à faible vitesse et basse altitude afin par exemple de se déplacer en sécurité à proximité du relief ou de bâtiments. Le pilotage de l'aéronef est ainsi plus aisé et précis.

En suivant le même raisonnement que précédemment, on peut déterminer la vitesse angulaire de lacet $\dot{\psi}$ assurant un virage coordonné par rapport au sol de la manière suivante. L'évolution de la projection sur un plan horizontal de la vitesse latérale de l'aéronef par rapport au sol $V_{HY}$ est donnée par l'équation suivante:

$$\dot{V}_{HY} = -\dot{Tk}_{sol} \cdot V_{HX} + G_{HY}$$

où $V_{HX}$ est la projection sur ce même plan horizontal de la vitesse longitudinale de l'aéronef par rapport au sol $(Va_{sol})_{Long}$ et $G_{HY}$ est la projection sur ce même plan horizontal de l'accélération latérale $G_Y$ de l'aéronef.

Le choix d'un taux d'évolution de la direction de vol $\dot{Tk}_{sol}$ tel que $\dot{Tk}_{sol} = \frac{G_{HY}}{V_{HX}} + \frac{\omega_0}{V_{HX}} \cdot V_{HY}$ conduit à l'équation différentielle du premier ordre $\dot{V}_{HY} = -\omega_0 \cdot V_{HY}$ convergeant exponentiellement vers 0 pour $\omega_0 > 0$, avec une constante de temps égale à l'inverse de ce coefficient $\omega_0$. Ensuite, le choix d'alignement du cap $\psi$ de l'aéronef sur la trajectoire $T_{sol}$ au sol impose aussi $\dot{\psi} = \dot{Tk}_{sol}$. Ce choix de vitesse angulaire de lacet assure donc la coordination du virage par rapport au sol. En utilisant $\frac{G_Y}{(Va_{sol})_{Long}} \approx \frac{G_{HY}}{V_{HX}}$, $G_Y$ étant l'accélération latérale de l'aéronef, $(Va_{sol})_{Long}$ la vitesse d'avancement longitudinale par rapport au sol, et en approximant le terme $\frac{\omega_0}{V_{HX}} \cdot V_{HY}$ par le terme $K' \times (Va_{sol})_{Lat}$ avec $(Va_{sol})_{Lat}$ la vitesse d'avancement latérale par rapport au sol et $K'$ un autre coefficient multiplicateur choisi de manière à restituer un gain variable $\frac{\omega_0}{V_{HX}}$ avec la projection de la vitesse d'avancement latérale de l'aéronef par rapport au sol, tel que $K' \times (Va_{sol})_{Lat} \approx \frac{\omega_0}{V_{HX}} \cdot V_{HY}$, on obtient la formule fournissant la vitesse angulaire en lacet $\dot{\psi}$ de l'aéronef suivante :

$$\dot{\psi} = \frac{G_Y}{(Va_{sol})_{Long}} + K' \times (Va_{sol})_{Lat}.$$

Par ailleurs, un pilote automatique peut permettre à l'aéronef de réaliser de tels virages coordonnés par rapport au sol ou bien par rapport à l'air en appliquant par exemple l'une ou l'autre de ces deux formules, c'est à dire $\dot{\psi} = \frac{G_Y}{(Va_{sol})_{Long}} + K' \times (Va_{sol})_{Lat}$ ou bien $\dot{\psi} = \frac{G_Y}{(Va_{air})_{Long}} + K \times Ny$ afin de déterminer notamment le cap $\psi$ à partir de la vitesse angulaire en lacet $\dot{\psi}$.

Cependant, en cas de fort vent, et de fort vent latéral en particulier, la réalisation d'un virage coordonné, par rapport au sol par exemple, demande une grande excursion de commande en lacet, c'est-à-dire une commande de grande amplitude nécessitant, lorsque ce fort vent latéral agit d'un côté défavorable sur l'aéronef, la fourniture d'une puissance importante de la part du dispositif anticouple en lacet, tel qu'un rotor arrière. En effet, le dispositif anticouple doit alors s'opposer au vent latéral afin de maintenir le cap $\psi$ de l'aéronef qui est alors généralement aligné sur la trajectoire $T_{sol}$ au sol, c'est-à-dire le nez de l'aéronef étant aligné sur la direction de vol $Tk_{sol}$ de la trajectoire $T_{sol}$.

De plus, la transition entre un virage coordonné par rapport au sol et un virage coordonné par rapport à l'air est difficile à gérer par un pilote car il manque de repères précis. Par ailleurs, le basculement du pilote automatique d'un type de coordination à l'autre peut occasionner des mouvements inopinés en lacet.

Avantageusement, le procédé de détermination d'une vitesse angulaire en virage selon l'invention permet d'une part de prendre en compte le vent subi par l'aéronef afin de réduire le besoin de puissance au niveau du dispositif anticouple lors d'un virage coordonné et d'autre part de mettre en place une transition progressive entre un virage coordonné par rapport au sol et un virage coordonné par rapport à l'air.

Il est en effet préférable, lorsqu'on tente une coordination sol, de limiter l'angle entre le cap $\psi$ et la direction du vent afin de réduire l'exposition latérale au vent, avec tous les effets indésirables qu'elle induit comme des angles de roulis importants ou des excursions de commande en lacet importantes, pouvant aller jusqu'aux butées de cette commande, et un besoin de puissance élevé dans le cas défavorable, au niveau du dispositif anticouple. Le virage n'est alors pas parfaitement coordonné vis-à-vis du sol, un écart angulaire apparaîssant alors entre le nez de l'aéronef et la trajectoire $T_{sol}$, mais le fonctionnement de l'aéronef est optimisé notamment au niveau de sa prise de roulis et de l'amplitude de la commande en lacet et de la consommation de puissance, et en particulier au niveau du dispositif anticouple.

Le procédé de détermination d'une vitesse angulaire en virage selon l'invention permet de déterminer la vitesse angulaire $\dot{\psi}$ en lacet de l'aéronef en prenant en compte les vitesses d'avancement de l'aéronef par rapport au sol $Va_{sol}$ et par rapport à l'air $Va_{air}$. Il est alors possible de déduire quelle vitesse angulaire $\dot{\psi}$ doit être appliquée au cap $\psi$ de l'aéronef pour lui permettre de voler en ligne droite comme en virage selon un compromis entre dérive, c'est-à-dire, l'angle entre la direction de vol $T_{sol}$ et le cap $\psi$, et angle de roulis, ou bien entre dérive et excursion de commande en lacet et puissance consommée par l'aéronef, notamment au niveau du dispositif anticouple. Le compromis le plus contraignant en termes de puissance consommée par l'aéronef est de préférence considéré.

Dans ce but, le procédé selon l'invention permet de comparer d'une part les vitesses d'avancement longitudinales de l'aéronef par rapport au sol et par rapport à l'air et d'autre part les vitesses d'avancement latérales de l'aéronef par rapport au sol et par rapport à l'air en prenant en compte des marges qui sont fonction de la vitesse d'avancement de l'aéronef par rapport à l'air, puis d'en déduire une vitesse angulaire $\dot{\psi}$ de l'aéronef.

Selon l'invention, la vitesse angulaire en lacet $\dot{\psi}$ à appliquer à l'aéronef, par exemple par l'intermédiaire d'un pilote automatique, afin de suivre une trajectoire $T_{sol}$ selon un virage peut être décomposée en une valeur d'anticipation A et une valeur de correction B telles que $\dot{\psi} = A + B$.

La valeur d'anticipation A de la vitesse angulaire en lacet $\dot{\psi}$ est déterminée à partir de la formule classique de détermination d'une vitesse angulaire en virage coordonné, c'est-à-dire telle que $A = \frac{G_Y}{V_{Long}}$, $V_{Long}$ étant une vitesse longitudinale de l'aéronef.

Dans le cadre d'une coordination sol, cette vitesse longitudinale $V_{Long}$ est la vitesse d'avancement longitudinale de l'aéronef par rapport au sol $(Va_{sol})_{Long}$ alors que dans le cadre d'une coordination air, elle est égale à la vitesse d'avancement longitudinale de l'aéronef par rapport à l'air $(Va_{air})_{Long}$.

Afin de prendre en compte une transition entre la coordination sol et la coordination air, la vitesse longitudinale $V_{Long}$ est égale à la vitesse d'avancement longitudinale par rapport au sol $(Va_{sol})_{Long}$ tant que cette vitesse d'avancement longitudinale par rapport au sol $(Va_{sol})_{Long}$ est strictement comprise dans le premier intervalle *Int1*. Par contre, la vitesse longitudinale $V_{Long}$ est égale à la première borne inférieure de ce premier intervalle *Int1* lorsque la vitesse d'avancement longitudinale par rapport au sol $(Va_{sol})_{Long}$ est inférieure ou égale à cette première borne inférieure et la vitesse longitudinale $V_{Long}$ est égale à la première borne supérieure de ce premier intervalle *Int1* lorsque cette vitesse d'avancement longitudinale par rapport au sol $(Va_{sol})_{Long}$ est supérieure ou égale à cette première borne supérieure.

Par ailleurs, afin d'assurer une transition progressive entre la coordination sol et la coordination air, la marge *Offset* est variable et fonction de la vitesse d'avancement de l'aéronef par rapport à l'air $Va_{air}$. De plus, cette marge *Offset* diminue lorsque la vitesse d'avancement de l'aéronef par rapport à l'air $Va_{air}$ augmente.

De fait, la vitesse longitudinale $V_{Long}$ prise en compte pour le calcul de la valeur d'anticipation *A* est bornée par le premier intervalle *Int1*, ce qui a pour effet de limiter ses variations. De plus, le premier intervalle *Int1* étant centré sur la vitesse d'avancement longitudinale de l'aéronef par rapport à l'air $(Va_{air})_{Long}$, la vitesse longitudinale $V_{Long}$ évolue entre la vitesse d'avancement longitudinale de l'aéronef par rapport au sol $(Va_{sol})_{Long}$ et une valeur proche de la vitesse d'avancement de l'aéronef par rapport à l'air $(Va_{air})_{Long}$ assurant ainsi une transition progressive entre la coordination sol et la coordination air.

Avantageusement, la comparaison entre les vitesses d'avancement longitudinales de l'aéronef par rapport au sol $(Va_{sol})_{Long}$ et par rapport à l'air $(Va_{air})_{Long}$ permet également de prendre en compte le vent longitudinal subi par l'aéronef dans la détermination de la vitesse angulaire en lacet $\dot{\psi}$.

Par exemple, cette marge *Offset* est constante pour une vitesse d'avancement de l'aéronef par rapport à l'air $Va_{air}$ inférieure ou égale à 20 noeuds (20 kt) et cette marge *Offset* est égale à 20 noeuds (20 kt). Pour une vitesse d'avancement de l'aéronef par rapport à l'air $Va_{air}$ comprise entre 20 et 70 noeuds (20 à 70 kt), cette marge *Offset* diminue jusqu'à être nulle pour une vitesse d'avancement de l'aéronef par rapport à l'air $Va_{air}$ supérieure ou égale à 70 noeuds (70 kt).

Ainsi, à partir d'une vitesse d'avancement de l'aéronef par rapport à l'air $Va_{air}$ égale à 70 noeuds (70 kt), la marge *Offset* est nulle. Le premier intervalle *Int1* est alors réduit à une seule valeur, à savoir la vitesse d'avancement de l'aéronef par rapport à l'air $Va_{air}$. De la sorte, la vitesse longitudinale $V_{Long}$ est égale à la vitesse d'avancement longitudinale de l'aéronef par rapport à l'air $(Va_{air})_{Long}$. La valeur d'anticipation *A* correspond alors à une coordination air, ce qui cohérent avec la vitesse d'avancement élevée de l'aéronef.

A contrario, pour une vitesse d'avancement de l'aéronef par rapport à l'air $Va_{air}$ inférieure ou égale à 20 noeuds (20kt), les premières bornes du premier intervalle *Int1* sont 0 et 40 noeuds (0 et 40kt). De fait, tant que la vitesse d'avancement de l'aéronef par rapport au sol $Va_{sol}$ est comprise dans ce premier intervalle *Int1,* la vitesse longitudinale $V_{Long}$ est égale à la vitesse d'avancement longitudinale de l'aéronef par rapport au sol $(Va_{sol})_{Long}$. La valeur d'anticipation *A* correspond alors à une coordination sol, ce qui est cohérent avec la vitesse d'avancement faible de l'aéronef.

Enfin, pour une vitesse d'avancement de l'aéronef par rapport à l'air $Va_{air}$ comprise entre 20 et 70 noeuds (20 à 70 kt), la marge *Offset* est variable et permet de réaliser une transition progressive entre la coordination sol et la coordination air. En effet, la vitesse longitudinale $V_{Long}$ prise en compte pour le calcul de la valeur d'anticipation *A* étant bornée par le premier intervalle *Int1* centré sur la vitesse d'avancement de l'aéronef par rapport à l'air $Va_{air}$, cette vitesse longitudinale $V_{Long}$ évolue de façon progressive et sans variation brutale. De plus, la marge *Offset* diminuant lorsque la vitesse d'avancement de l'aéronef par rapport à l'air $Va_{air}$ augmente, la largeur $D_{int1}$ de ce premier intervalle *Int1* tend à diminuer lorsque la vitesse d'avancement de l'aéronef par rapport à l'air $Va_{air}$ augmente.

Par suite, lorsque la vitesse d'avancement de l'aéronef par rapport à l'air $Va_{air}$ augmente au cours d'un virage, la vitesse longitudinale $V_{Long}$ prise en compte pour le calcul de la valeur d'anticipation *A* varie progressivement de la vitesse d'avancement de l'aéronef par rapport au sol $Va_{sol}$ jusqu'à la vitesse d'avancement de l'aéronef par rapport à l'air $Va_{air}$. La marge *Offset* varie de préférence de façon linéaire jusqu'à une valeur nulle sur cette plage de vitesse comprise entre 20 et 70 noeuds (20 à 70 kt).

La valeur de correction *B* de la vitesse angulaire en lacet $\dot{\psi}$ peut être déterminée à partir de l'une ou de l'autre des deux formules de détermination d'une vitesse angulaire en virage coordonné, c'est-à-dire telle que $B = K_1 \times Ny$ en coordination air et $B = K_2 \times (Va_{sol})_{Lat}$ en coordination sol.

Par ailleurs, dans le cadre d'un virage coordonné, que ce soit par rapport au sol ou à l'air, on cherche à limiter, voire annuler la vitesse latérale de l'aéronef par rapport au sol $(Va_{sol})_{Lat}$ dans la mesure où le facteur de charge latéral *Ny,* qui est un révélateur de la présence d'une vitesse latérale de l'aéronef par rapport à l'air $(Va_{air})_{Lat}$, n'est pas trop important.

Afin d'une part de limiter ce facteur de charge latéral *Ny* à une valeur acceptable et, par suite, de limiter également la vitesse latérale de l'aéronef et d'autre part de prendre également en compte une transition entre la coordination sol et la coordination air, le procédé de détermination d'une vitesse angulaire en virage selon l'invention permet d'introduire une limitation de la vitesse latérale de l'aéronef par rapport au sol $(Va_{sol})_{Lat}$ prise en compte dans la détermination de la vitesse angulaire en lacet $\dot{\psi}$. Cette limitation est notamment fonction du facteur de charge latéral *Ny,* qui appartient par exemple à [-0.1 $G$, +0.1 $G$], $G$ étant l'accélération de la pesanteur terrestre.

De la sorte, la valeur de correction $B$ de la vitesse angulaire en lacet $\dot{\psi}$ est alors déterminée, selon l'invention, par une formule,

telle que

$$B = K_2 \times Va_{lat} \, ,$$

une relation existant entre la vitesse d'avancement latérale par rapport à l'air $(Va_{air})_{Lat}$ et le facteur de charge $Ny$,

telle que

$$(Va_{air})_{Lat} = K_1 \times Ny,$$

$K_1$ et $K_2$ étant un premier et un second coefficients multiplicateurs. Ces coefficients multiplicateurs sont déterminés à partir des équations différentielles du premier ordre évoquées précédemment et des gains variables associés.

Cette vitesse latérale $V_{Lat}$ est égale à la vitesse d'avancement latérale de l'aéronef par rapport au sol $(Va_{sol})_{Lat}$, mais est limitée à un second intervalle $Int2$. Le second intervalle $Int2$ a une largeur $Dint_2$ qui est égale à la somme des marges inférieure $Offset_{Lo}$ et supérieure $Offset_{Hi}$,

telle que

$$D_{int2} = \text{Offset}_{Lo} + \text{Offset}_{Hi}.$$

Les marges inférieure $Offset_{Lo}$ et supérieure $Offset_{Hi}$ sont généralement différentes pour prendre en compte les effets de la rotation du rotor principal de l'aéronef et plus particulièrement du couple en lacet qu'il engendre sur le fuselage de l'aéronef.

En conséquence, la vitesse latérale $V_{Lat}$ est égale à la vitesse d'avancement latérale par rapport au sol $(Va_{sol})_{Lat}$ tant que cette vitesse d'avancement latérale par rapport au sol $(Va_{sol})_{Lat}$ est strictement comprise dans le second intervalle $Int2$. En revanche, la vitesse latérale $V_{Lat}$ est égale à la seconde borne inférieure de ce second intervalle $Int2$ lorsque la vitesse d'avancement latérale par rapport au sol $(Va_{sol})_{Lat}$ est inférieure ou égale à cette seconde borne inférieure et la vitesse latérale $V_{Lat}$ est égale à la seconde borne supérieure de ce second intervalle $Int2$ lorsque cette vitesse d'avancement latérale par rapport au sol $(Va_{sol})_{Lat}$ est supérieure ou égale à cette seconde borne supérieure.

Afin d'assurer une transition progressive entre la coordination sol et la coordination air, les marges inférieure $Offset_{Lo}$ et supérieure $Offset_{Hi}$ sont variables et fonction de la vitesse d'avancement de l'aéronef par rapport à l'air $Va_{air}$. De plus, ces marges inférieure $Offset_{Lo}$ et supérieure $Offset_{Hi}$ diminuent lorsque la vitesse d'avancement de l'aéronef par rapport à l'air $Va_{air}$ augmente, ramenant ainsi progressivement l'aéronef vers une coordination air.

Par exemple, les marge supérieure $Offset_{Hi}$ et marge inférieure $Offset_{Lo}$ sont respectivement égales à +20 noeuds (+20kt) et -20 noeuds (-20 kt) lorsque la vitesse d'avancement de l'aéronef par rapport à l'air $Va_{air}$ est inférieure à 20 noeuds (20kt) alors que ces marge supérieure $Offset_{Hi}$ et marge inférieure $Offset_{Lo}$ sont nulles lorsque cette vitesse d'avancement de l'aéronef par rapport à l'air $Va_{air}$ est supérieure ou égale à 70 noeuds (70 kt).

De fait, la vitesse latérale $V_{Lat}$ prise en compte pour le calcul de la valeur de correction $B$ est bornée par le second intervalle $Int2,$ ce qui a pour effet de limiter ses variations. De plus, les secondes bornes inférieure et supérieure du second intervalle $Int2$ sont situées de part et d'autre du premier produit du premier coefficient multiplicateur $K_1$ et du facteur de charge latéral $Ny$: la vitesse latérale $V_{Lat}$ évolue ainsi entre la vitesse d'avancement de l'aéronef par rapport au sol $(Va_{sol})_{Lat}$ et les secondes bornes du second intervalle $Int2,$ assurant ainsi une transition progressive entre la coordination sol et la coordination air.

Avantageusement, la comparaison entre la vitesse d'avancement latérale de l'aéronef par rapport au sol $(Va_{sol})_{Lat}$ et les secondes bornes du second intervalle $Int2$ permet également de prendre en compte le vent latéral subi par l'aéronef dans la détermination de la vitesse angulaire en lacet $\dot{\psi}$.

La vitesse angulaire en lacet $\dot{\psi}$ de l'aéronef est alors déterminée par la somme de la valeur d'anticipation $A$ et de la valeur de correction $B$,

telle que

$$\dot{\psi} = A + B.$$

On peut ensuite en déduire le cap $\psi$ à appliquer à l'aéronef en intégrant par rapport au temps cette vitesse angulaire en lacet $\dot{\psi}$. Cet angle de lacet $\psi$ est utilisé comme consigne de vol du pilote automatique afin de poursuivre la trajectoire $T_{sol}$ en obtenant un compromis entre la coordination du virage et l'utilisation de la puissance de l'aéronef en fonction des conditions de vent.

En outre, le facteur de charge latéral $Ny$ de l'aéronef utilisé pour déterminer la valeur de correction $B$ de la vitesse angulaire en lacet $\dot{\psi}$ peut être compensé afin de prendre en compte le facteur de charge latéral de l'aéronef en vol stationnaire sans vent.

Par ailleurs, le pilote de l'aéronef peut modifier le cap $\psi$ de l'aéronef en cours de virage, afin par exemple d'améliorer sa visibilité extérieure ou bien le confort des occupants de l'aéronef, tout en conservant la même trajectoire $T_{sol}$ de vol par rapport au sol. Une telle modification du cap $\psi$ peut être faite manuellement par transparence par l'intermédiaire d'un palonnier ou bien d'un organe de commande dédié tel qu'un « beep ».

La direction de vol de l'aéronef est alors inchangée alors que le cap $\psi$ a été modifié. De la sorte, la coordination du virage de l'aéronef n'est alors plus assurée. De plus, l'exposition de l'aéronef au vent est également modifiée.

Le procédé de détermination d'une vitesse angulaire en virage selon l'invention permet alors de gérer la priorité entre d'une part la demande de changement du cap $\psi$ du pilote et d'autre part un besoin de retour à une coordination de virage avec la prise en compte du vent.

Une telle modification du cap $\psi$ est essentiellement intéressante à basse vitesse, notamment pour permettre au pilote d'améliorer sa visibilité de l'environnement extérieur afin par exemple d'évoluer à basse altitude et à proximité des bâtiments et du relief. De fait, le procédé de détermination d'une vitesse angulaire en virage selon l'invention autorise une conservation du cap $\psi$ modifié par le pilote aux basses vitesses d'avancement $Va_{air}$ par rapport à l'air, c'est-à-dire aux vitesses d'avancement par rapport à l'air $Va_{air}$ inférieures ou égales à une vitesse seuil $V_{seuil}$.

Ainsi, pour des vitesses d'avancement par rapport à l'air $Va_{air}$ supérieures à cette vitesse seuil $V_{seuil}$, une coordination en virage est assurée par le procédé de détermination d'une vitesse angulaire en virage selon l'invention après que le pilote de l'aéronef ait modifié le cap $\psi$. De fait, le procédé détermine la vitesse angulaire en lacet $\dot{\psi}$ à partir de laquelle est déduit le cap $\psi$ à appliquer à l'aéronef par l'intermédiaire du pilote automatique.

En outre, cette vitesse seuil $V_{seuil}$ peut être variable pour prendre en compte le vent subi par l'aéronef, en particulier à faible vitesse d'avancement par rapport au sol. De préférence, cette vitesse seuil $V_{seuil}$ est constante pour une vitesse longitudinale $V_{Long}$ de l'aéronef supérieure ou égale à 30 noeuds (30 kt), augmente lorsque cette vitesse longitudinale $V_{Long}$ diminue jusqu'à 15 noeuds (15 kt), et est de nouveau constante pour une vitesse longitudinale $V_{Long}$ inférieure à 15 noeuds (15 kt). Ainsi, cette vitesse seuil $V_{seuil}$ permet de garantir un domaine de vitesse d'avancement par rapport au sol minimum dans lequel le cap $\psi$ est conservé.

Par exemple, cette vitesse seuil $V_{seuil}$ est un seuil à hystérésis dont les limites sont 60 et 70 noeuds (60 et 70 kt) pour une vitesse longitudinale $V_{Long}$ de l'aéronef inférieure ou égale à 30 noeuds (30 kt) et dont les limites sont 80 et 90 noeuds (80 et 90 kt) pour une vitesse longitudinale $V_{Long}$ inférieure à 15 noeuds (15 kt).

De plus, lorsqu'une telle modification du cap $\psi$ est suivie d'une action du pilote en roulis modifiant l'angle de route $Tk_{sol}$ et, par suite, la trajectoire $T_{sol}$ suivie par l'aéronef, le procédé de détermination d'une vitesse angulaire en virage selon l'invention permet de prendre en compte deux situations différentes. Une telle action du pilote en roulis peut être faite par transparence par l'intermédiaire d'un levier ou manche de commande de pas cyclique latéral ou bien par l'intermédiaire d'un organe de commande dédié tel qu'un « beep ».

Tout d'abord, si le pilote n'applique qu'une légère correction de trajectoire $T_{sol}$, le cap $\psi$ est alors corrigé afin de conserver un écart sensiblement inchangé entre l'angle de route $Tk_{sol}$ et le cap $\psi$ modifié préalablement par le pilote. On considère qu'une légère correction de trajectoire $T_{sol}$ correspond à une modification de l'angle de route $Tk_{sol}$ inférieure ou égale à un angle seuil. Par exemple, un angle seuil est égal à 10°.

Ensuite, si le pilote modifie de manière plus importante la trajectoire $T_{sol}$, c'est-à-dire de façon que la modification de l'angle de route $Tk_{sol}$ est supérieure à l'angle seuil, l'exposition au vent de l'aéronef est en conséquence également modifiée de façon significative. Le cap $\psi$ modifié suite à l'action du pilote n'a alors plus d'intérêt vis-à-vis de la nouvelle trajectoire $T_{sol}$ suivie par l'aéronef. De fait, le cap $\psi$ modifié peut être abandonné au profit d'une reprise de la coordination du virage selon cette nouvelle trajectoire $T_{sol}$ par le procédé de détermination d'une vitesse angulaire en virage selon l'invention. Le cap $\psi$ est alors déduit de la vitesse angulaire en lacet $\dot{\psi}$ déterminé à partir des valeurs *d'anticipation A* et de correction $B$ par le procédé de détermination d'une vitesse angulaire en virage selon l'invention.

La présente invention a également pour objet un système de détermination d'une vitesse angulaire en virage pour un aéronef à voilure tournante, ce système de détermination d'une vitesse angulaire en virage comportant au moins deux composants et une mémoire, un premier composant étant par exemple dédié au calcul de la valeur d'anticipation $A$ de la vitesse angulaire en lacet $\dot{\psi}$ et un second composant étant dédié au calcul de la valeur de correction $B$ de cette vitesse angulaire en lacet $\dot{\psi}$. La mémoire permet notamment de conserver les valeurs utilisées par les composants, par exemple les coefficients multiplicateurs $K_1$ et $K_2$, le cap $\psi$ modifié, ainsi que les résultats, par exemple les valeurs d'anticipation $A$ et de correction $B$ de la vitesse angulaire en lacet $\dot{\psi}$.

L'aéronef est caractérisé par trois directions privilégiées, une direction longitudinale X s'étendant de l'avant de l'aéronef vers l'arrière de l'aéronef, une direction d'élévation Z s'étendant de bas en haut perpendiculairement à la direction longitudinale X et une direction transversale Y s'étendant de droite à gauche perpendiculairement aux directions longitudinale X et d'élévation Z. La direction longitudinale X est l'axe de roulis de l'aéronef, la direction transversale Y est l'axe de tangage et la direction d'élévation Z est l'axe de lacet.

L'aéronef comporte au moins une voilure tournante, munie de plusieurs pales principales dont le pas collectif et le pas cyclique sont variables autour d'un axe de pas, permettant à l'aéronef d'effectuer des mouvements de rotation autour de ces directions X,Y,Z et de translation selon les directions X,Y,Z.

L'aéronef à voilure tournante est également muni d'au moins un moyen de commande et d'un pilote automatique générateur d'ordres de commande selon des modes prédéfinis de fonctionnement et selon des consignes de vol. Les ordres de commande du pilote ou bien du pilote automatique peuvent provoquer ces mouvements de l'aéronef en rotation et/ou en translation par rapport aux directions X,Y,Z.

Pour la suite de la description, on considère que dans un composant, un premier élément est positionné en amont d'un second élément lorsqu'ils sont reliés entre eux par une liaison qui peut être filaire ou non filaire. Au moins une sortie du premier élément est notamment reliée à une entrée du second élément. Le second élément est alors positionné en aval du premier élément.

Le premier composant comporte un premier limiteur, un premier soustracteur, un premier additionneur et un diviseur. Le premier soustracteur et le premier additionneur sont positionnés en amont du premier limiteur, respectivement en amont des premières entrées minimale *Min1* et maximale *Max1* de ce premier limiteur. Le premier soustracteur reçoit en entrée la vitesse d'avancement longitudinale par rapport à l'air $(Va_{air})_{Long}$ et la marge *Offset* puis délivre en sortie une première soustraction entre cette vitesse d'avancement longitudinale par rapport à l'air $(Va_{air})_{Long}$ et la marge *Offset*. Le premier additionneur reçoit en entrée cette vitesse d'avancement longitudinale par rapport à l'air $(Va_{air})_{Long}$ et la marge *Offset* puis délivre en sortie une première addition entre cette vitesse d'avancement longitudinale par rapport à l'air $(Va_{air})_{Long}$ et la marge *Offset*.

Le premier limiteur reçoit en entrée principale la vitesse d'avancement longitudinale par rapport au sol $(Va_{sol})_{Long}$ et en premières entrées minimale *Min1* et maximale *Max1* respectivement la première soustraction et la première addition. Les premières entrées minimale *Min1* et maximale *Max1* constituent respectivement les premières bornes inférieure et supérieure du premier intervalle *Int1*. Ce premier limiteur délivre en sortie la vitesse longitudinale $V_{Long}$ qui est égale à la vitesse d'avancement longitudinale par rapport au sol $(Va_{sol})_{Long}$ limitée aux premières entrées minimale *Min1* et maximale *Max1* lorsque la vitesse d'avancement longitudinale par rapport au sol $(Va_{sol})_{Long}$ est respectivement inférieure ou supérieure aux premières entrées minimale *Min1* et maximale *Max1*.

Le diviseur est positionné en aval du premier limiteur et reçoit en entrée comme numérateur l'accélération latérale $G_Y$ de l'aéronef commandée par un pilote de l'aéronef et comme dénominateur la vitesse longitudinale $V_{Long}$. Le diviseur délivre en sortie la division de l'accélération latérale $G_Y$ par la vitesse longitudinale $V_{Long}$ correspondant à la valeur d'anticipation $A$ de la vitesse angulaire $\dot{\psi}$ en lacet à appliquer à l'aéronef.

Le second composant comporte un second limiteur, un second soustracteur, un second additionneur et deux multiplicateurs. Un premier multiplicateur est positionné en amont du second soustracteur et du second additionneur. Ce premier multiplicateur reçoit en entrée le premier coefficient multiplicateur $K_1$ et le facteur de charge latéral *Ny* puis délivre en sortie un premier produit du premier coefficient multiplicateur $K_1$ et du facteur de charge latéral *Ny*.

Le second soustracteur et le second additionneur sont positionnés en amont du second limiteur, respectivement en amont d'une seconde entrée minimale *Min2* et d'une seconde entrée maximale *Max2* de ce second limiteur. Ce second soustracteur reçoit en entrée ce premier produit et la marge inférieure *Offset_{Lo}* puis délivre en sortie une seconde soustraction entre le premier produit et la marge inférieure *Offset_{Lo}*. Ce second additionneur reçoit en entrée ce premier produit et la marge supérieure *Offset_{Hi}* puis délivre en sortie une seconde addition entre le premier produit et la marge supérieure *Offset_{Hi}*.

Le second limiteur reçoit en entrée principale la vitesse d'avancement latérale par rapport au sol $(Va_{sol})_{Lat}$ et en secondes entrées minimale *Min2* et maximale *Max2* respectivement la seconde soustraction et la seconde addition. Les secondes entrées minimale *Min2* et maximale *Max2* constituent respectivement les secondes bornes inférieure et supérieure du second intervalle *Int2*. Ce second limiteur délivre en sortie la vitesse latérale $V_{Lat}$ qui est égale à la vitesse d'avancement latérale par rapport au sol $(Va_{sol})_{Lat}$ limitée aux secondes entrées minimale *Min2* et maximale *Max2* lorsque la vitesse d'avancement latérale par rapport au sol $(Va_{sol})_{Lat}$ est respectivement inférieure ou supérieure aux secondes entrées minimale *Min2* et maximale *Max2*.

Un second multiplicateur est positionné en aval du second limiteur et reçoit en entrée la vitesse latérale $V_{Lat}$ et le second coefficient multiplicateur $K_2$ puis délivre en sortie un second produit de la vitesse latérale $V_{Lat}$ et du second coefficient multiplicateur $K_2$ correspondant à la valeur de correction $B$ de la vitesse angulaire $\dot{\psi}$ en lacet à appliquer à l'aéronef.

Selon une variante de ce système de détermination d'une vitesse angulaire en virage, les premier et second composants peuvent être fusionnés pour former un seul et même calculateur.

En outre, le second composant peut comporter un compensateur positionné en aval du premier multiplicateur afin de prendre en compte un facteur de charge latéral de l'aéronef en vol stationnaire.

Par ailleurs, le cap $\psi$ à appliquer à l'aéronef lors de la réalisation d'un virage peut être déterminé à partir de la vitesse angulaire en lacet $\dot{\psi}$ par un troisième composant présent par exemple dans le système de détermination d'une vitesse angulaire en virage.

Le système de détermination d'une vitesse angulaire en virage peut ainsi mettre en oeuvre le procédé de détermination d'une vitesse angulaire en virage précédemment décrit.

L'invention et ses avantages apparaîtront avec plus de détails dans le cadre de la description qui suit avec des exemples de réalisation donnés à titre illustratif en référence aux figures annexées qui représentent :

- la figure 1, un aéronef équipé d'un système de détermination d'une vitesse angulaire en virage selon l'invention,

- la figure 2, un schéma représentant l'angle de route sol et le cap de l'aéronef,

- les figures 3 et 4, deux vues de détail des premier et second composants du système de détermination d'une vitesse angulaire en virage.

Les éléments présents dans plusieurs figures distinctes sont affectés d'une seule et même référence.

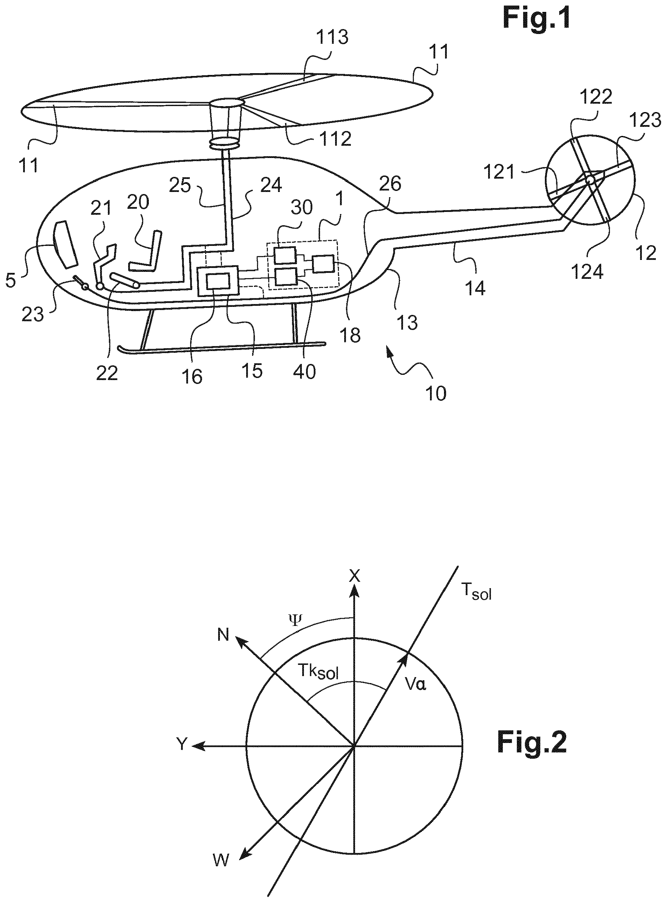

Sur la figure 1, un aéronef 10 est représenté, cet aéronef 10 comprenant un rotor principal 11 positionné au-dessus d'un fuselage 13 et un dispositif anticouple 12 tel un rotor arrière positionné à l'extrémité arrière d'une poutre de queue 14. L'aéronef 10 comporte également un tableau de bord 5, un siège 20 sur lequel peut s'asseoir un pilote de l'aéronef 10, un pilote automatique 15, un système de détermination d'une vitesse angulaire en virage 1 et des moyens de commande manuels, composés notamment de deux leviers ou bien des manches de commande 21,22 et d'un palonnier 23. Ce système de détermination d'une vitesse angulaire en virage 1 comporte un premier et un second composants 30,40 ainsi qu'une mémoire 18.

De plus, un repère X,Y,Z est attaché à cet aéronef 10, et plus particulièrement à son centre de gravité. La direction longitudinale X s'étend de l'avant de l'aéronef 10 vers l'arrière de l'aéronef 10, la direction d'élévation Z s'étend de bas en haut perpendiculairement à la direction longitudinale X, la direction transversale Y s'étendant de droite à gauche perpendiculairement aux directions longitudinale X et d'élévation Z.

La direction longitudinale X est l'axe de roulis de l'aéronef 10, la direction transversale Y est son axe de tangage et la direction d'élévation Z est son axe de lacet.

Le rotor principal 11 est à axe de rotation sensiblement vertical, c'est-à-dire parallèle à la direction d'élévation Z, et est muni de trois pales principales 111,112,113 dont les pas collectif et cyclique sont variables et pilotables par l'intermédiaires des leviers de commande 21,22 et du pilote automatique 15. De même, le rotor arrière 12 est à axe de rotation sensiblement horizontal, c'est-à-dire parallèle à la direction transversale Y, et est muni de quatre pales secondaires 121,122,123,124 dont le pas collectif est variable et pilotable par l'intermédiaire du palonnier 23 et du pilote automatique 15.

Plus précisément, le premier levier de commande 21 pilote le pas cyclique des pales principales 111,112,113 par l'intermédiaire d'une première chaîne cinématique de commande 24. Le second levier de commande 22 pilote quant à lui le pas collectif des pales principales 111,112,113 par l'intermédiaire d'une seconde chaîne cinématique de commande 25. De fait, une action sur ce premier levier de commande 21 permet alors de commander des mouvements de rotation de l'aéronef 10 autour des directions longitudinale X et transversale Y et une action sur ce second levier de commande permet alors de commander des mouvements de translation de l'aéronef 10 selon la direction d'élévation Z.

De même, le palonnier 23 pilote le pas collectif des pales secondaires 121,122,123,124 par l'intermédiaire d'une troisième chaîne cinématique de commande 26. De fait, une action sur ce palonnier 23 permet alors de commander des mouvements de rotation de l'aéronef 10 autour de son axe de lacet.

Ces chaînes cinématiques de commande 24,25,26 permettant d'actionner les différentes pales et peuvent être par exemple composées par des liaisons totalement mécaniques entre les moyens de commande manuels 21,22,23 et les pales. Ces chaînes cinématiques de commande 24,25,26 peuvent également être composées par des liaisons mécaniques associées à des moyens d'action hydrauliques ou bien des liaisons électriques associées à de tels moyens d'action hydrauliques.

En outre, le pilote automatique 15 permet de piloter les pas collectif et cyclique des pales principales 111,112,113 ainsi que le pas collectif des pales secondaires 121,122,123,124 en agissant respectivement sur ces chaînes cinématiques de commande 24,25,26. De fait, le pilote automatique 15 permet alors de commander des mouvements de rotation de l'aéronef 10 autour des directions longitudinale X et transversale Y et des mouvements de translation de l'aéronef 10 selon la direction d'élévation Z ainsi que des mouvements de rotation de l'aéronef 10 autour de son axe de lacet.

L'aéronef 10 peut voler en suivant une trajectoire $T_{sol}$ par rapport au sol, cette trajectoire $T_{sol}$ étant déterminée par rapport au sol et définie dans un repère géographique terrestre, par exemple déterminé par les points cardinaux et la direction de la gravité terrestre.

Un vol d'un aéronef 10 selon cette trajectoire $T_{sol}$ peut être notamment caractérisé par un angle de route sol $Tk_{sol}$ entre la direction de la trajectoire $T_{sol}$ et la direction du nord dans un plan horizontal de ce repère géographique terrestre, une vitesse d'avancement $Va$ de l'aéronef 10, une pente P formée par l'angle entre la direction de la trajectoire $T_{sol}$ et l'orientation horizontale du repère terrestre et un cap $\psi$ qui est l'angle formé par la projection dans un plan horizontal du repère terrestre de la direction longitudinale X de l'aéronef 10 et la direction du nord.

La vitesse d'avancement $Va$ de l'aéronef 10 est la vitesse de l'aéronef 10 selon la direction de cette trajectoire $T_{sol}$, cette vitesse pouvant être définie par rapport au sol ou bien par rapport à l'air.

La figure 2 représente une projection sur un plan horizontal de ce repère terrestre d'une trajectoire $T_{sol}$. Les directions longitudinale et transversale X,Y de l'aéronef 10 sont également représentées ainsi que les directions N,W d'un repère géographique terrestre.

Le cap $\psi$ est ainsi représenté entre la direction longitudinale X de l'aéronef 10 et la direction N du nord. L'angle de route sol $Tk_{sol}$ est représenté entre la direction de la trajectoire $T_{sol}$ et la direction N du nord.

On constate que le cap $\psi$ est différent de l'angle de route sol $Tk_{sol}$. Par suite, le nez et la poutre de queue 14 de l'aéronef 10 étant alignés sur la direction longitudinale X ne sont alors pas alignés avec la trajectoire $T_{sol}$. De même, la vitesse d'avancement $Va$ est alignée sur la trajectoire $T_{sol}$ et n'est pas parallèle à la direction longitudinale X.

Cependant, selon les conditions de vol de l'aéronef 10 et en particulier sa vitesse d'avancement $Va$, un virage de l'aéronef 10 peut être réalisé de différentes façons. En effet, lorsque l'aéronef 10 évolue à une faible vitesse d'avancement $Va$, un virage de l'aéronef 10 est de préférence coordonné par rapport au sol afin de privilégier le suivi d'une trajectoire par rapport au sol pour par exemple se déplacer à basse altitude à proximité de bâtiments et du relief.

Par contre, lorsque l'aéronef 10 évolue à une vitesse d'avancement $Va$ plus importante, lors d'un vol de croisière, un virage de l'aéronef 10 est de préférence coordonné par rapport à l'air afin de privilégier le confort des occupants de l'aéronef 10.

Le système de détermination d'une vitesse angulaire en virage 1 de l'aéronef 10 peut mettre en oeuvre un procédé de détermination d'une vitesse angulaire en virage afin d'une part de réaliser des virages coordonnés par rapport au sol ou bien à l'air et d'autre part de gérer la transition entre la coordination sol et la coordination air, tout en prenant en compte le vent subi par l'aéronef 10.

En effet, la réalisation de virages coordonnés par rapport au sol sans prendre en compte le vent subi par l'aéronef 10 peut nécessiter le maintien d'un angle de roulis élevé, une grande excursion de commande en lacet, en cas de fort vent latéral, correspondant, lorsque ce fort vent latéral agit d'un côté défavorable sur l'aéronef, à la fourniture d'une puissance importante de la part du dispositif anticouple 12 de l'aéronef 10 pour s'opposer à ce vent latéral. Il est cependant possible d'optimiser le fonctionnement de l'aéronef 10, notamment au niveau de sa prise de roulis et de sa consommation de puissance, et en particulier au niveau de celle du dispositif anticouple 12 en modifiant le cap $\psi$ de l'aéronef 10. Par contre, dans ce cas, le virage n'est plus parfaitement coordonné. Un compromis doit alors être trouvé entre la réalisation d'un virage coordonné, la prise de roulis de l'aéronef, la mise de pas du dispositif anticouple 12 et/ou la consommation de puissance au niveau de ce dispositif anticouple 12.

Le procédé de détermination d'une vitesse angulaire en virage selon l'invention permet de déterminer la vitesse angulaire $\dot\psi$ de l'aéronef 10 en prenant en compte les vitesses d'avancement de l'aéronef 10 par rapport au sol $Va_{sol}$ et par rapport à l'air $Va_{air}$, l'accélération latérale $Gy$ et le facteur de charge latéral $Ny$. Il est alors possible de déduire par simple intégration de cette vitesse angulaire $\dot\psi$ le cap $\psi$ à appliquer à l'aéronef 10 par exemple par l'intermédiaire du pilote automatique 15.

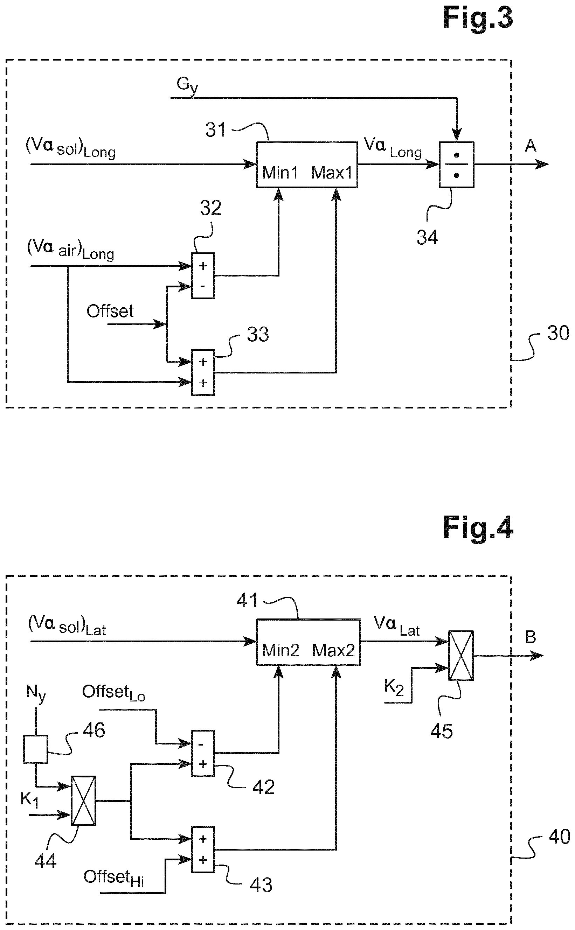

Les figures 3 et 4 représentent respectivement le premier composant 30 et le second composant 40 du système de détermination d'une vitesse angulaire en virage 1 selon l'invention.

Le premier composant 30 permet de calculer une valeur d'anticipation A de cette vitesse angulaire en lacet $\dot\psi$ alors que le second composant 40 permet de calculer une valeur de correction B de cette vitesse angulaire en lacet $\dot\psi$, telles que

$$\dot\psi = A + B.$$

La mémoire 18 permet notamment de conserver les valeurs utilisées par ces composants 30,40 ainsi que les résultats de leurs calculs.

Le premier composant 30 représenté sur la figure 3 comporte un premier limiteur 31, un premier soustracteur 32, un premier additionneur 33 et un diviseur 34. Le premier soustracteur 32 et le premier additionneur 33 sont positionnés en amont du premier limiteur 31, respectivement en amont des premières entrées minimale *Min1* et maximale *Max1* de ce premier limiteur 31. Les premières entrées minimale *Min1* et maximale *Max1* forment ainsi les premières bornes inférieure et supérieure d'un premier intervalle *Int1* de largeur *Dint1*. Le diviseur 34 est positionné en aval du premier limiteur 31.

Le premier soustracteur 32 et le premier additionneur 33 reçoivent en entrée la vitesse d'avancement longitudinale par rapport à l'air $(Va_{air})_{Long}$ et la marge *Offset* puis délivre respectivement en sortie une première soustraction et une première addition entre cette vitesse d'avancement longitudinale par rapport à l'air $(Va_{air})_{Long}$ et la marge *Offset.*

Le premier limiteur 31 reçoit en entrée principale la vitesse d'avancement longitudinale par rapport au sol $(Va_{sol})_{Long}$, et en premières entrées minimale *Min1* et maximale *Max1* respectivement la première soustraction et la première addition. Les premières entrées minimale *Min1* et maximale *Max1* sont alors respectivement

$$\mathrm{Min1} = (Va_{air})_{Long} - \frac{D_{int1}}{2} \quad \text{et} \quad Max1 = (Va_{air})_{Long} + \frac{D_{int1}}{2} \quad \text{avec la marge } Offset \text{ telle que}$$

$$Offset = \frac{D_{int1}}{2}.$$

De fait, ce premier limiteur 31 délivre en sortie une vitesse longitudinale $V_{Long}$ qui est égale à la vitesse d'avancement longitudinale par rapport au sol $(Va_{sol})_{Long}$, telle que $Va_{Long} = (Va_{sol})_{Long}$ lorsque la vitesse d'avancement longitudinale par rapport au sol $(Va_{sol})_{Long}$ est strictement comprise entre les premières entrées minimale *Min1* et maximale *Max1*. Par contre, ce premier limiteur 31 délivre en sortie une vitesse longitudinale $V_{Long}$ qui est égale à la première entrée minimale *Min1*,

telle que $Va_{Long} = (Va_{air})_{Long} - \frac{D_{int1}}{2}$ lorsque cette vitesse d'avancement longitudinale par rapport au sol $(Va_{sol})_{Long}$ est inférieure ou égale à cette première entrée minimale *Min1* alors que cette vitesse longitudinale $V_{Long}$ est égale à la première entrée maximale *Max1*,

telle que $Va_{Long} = (Va_{air})_{Long} + \frac{D_{int1}}{2}$ lorsque cette vitesse d'avancement longitudinale par rapport au sol $(Va_{sol})_{Long}$ est supérieure ou égale à cette première entrée maximale *Max1.*

Enfin, le diviseur 34 reçoit en entrée comme numérateur l'accélération latérale $G_Y$ de l'aéronef 10 commandée par un pilote de l'aéronef 10 et comme dénominateur la vitesse longitudinale $V_{Long}$. Le diviseur 34 délivre en sortie la division de l'accélération latérale $G_Y$ par la vitesse longitudinale $V_{Long}$ correspondant à la valeur d'anticipation *A* de la vitesse angulaire $\dot{\psi}$ en lacet à appliquer à l'aéronef 10,

telle que $A = \frac{G_Y}{Va_{Long}}.$

Le second composant 40 représenté sur la figure 4 comporte un second limiteur 41, un second soustracteur 42, un second additionneur 43 et deux multiplicateurs 44,45. Un premier multiplicateur 44 est positionné en amont du second soustracteur 42 et du second additionneur 43. Le second soustracteur 42 et le second additionneur 43 sont positionnés en amont du second limiteur 41, respectivement en amont d'une seconde entrée minimale *Min2* et d'une seconde entrée maximale *Max2* de ce second limiteur 41. Les secondes entrées minimale *Min2* et maximale *Max2* forment ainsi les secondes bornes inférieures et supérieures d'un second intervalle *Int2* de largeur *Dint2.* Un second multiplicateur 45 est positionné en aval du second limiteur 41.

Le premier multiplicateur 44 reçoit en entrée le premier coefficient multiplicateur $K_1$ et le facteur de charge latéral *Ny* puis délivre en sortie un premier produit $K_1 \times Ny$ du premier coefficient multiplicateur $K_1$ et du facteur de charge latéral *Ny.* Le second soustracteur 42 reçoit en entrée ce premier produit $K_1 \times Ny$ et la marge inférieure *Offset$_{Lo}$* puis délivre en sortie une seconde soustraction entre le premier produit $K_1 \times Ny$ et la marge inférieure *Offset$_{Lo}$.* Le second additionneur 43 reçoit en entrée ce premier produit $K_1 \times Ny$ et la marge supérieure *Offset$_{Hi}$* puis délivre en sortie une seconde addition entre le premier produit $K_1 \times Ny$ et la marge supérieure *Offset$_{Hi}$.*

Le second limiteur 41 reçoit en entrée principale la vitesse d'avancement latérale par rapport au sol $(Va_{sol})_{Lat}$ et en secondes entrées minimale *Min2* et maximale *Max2* respectivement la seconde soustraction et la seconde addition. Les secondes entrées minimale *Min2* et maximale *Max2* sont alors respectivement *Min2* = $K_1 \times Ny$ - *Offset$_{Lo}$* et *Max2* = $K_1 \times Ny$ + *Offset$_{Hi}$*, le second intervalle *Int2* ayant une largeur *D$_{int2}$*, telle que *Dint2* = *Offset$_{Lo}$* + *Offset$_{Hi}$.* De fait, le second limiteur 41 délivre en sortie la vitesse latérale $V_{Lat}$ qui est égale à la vitesse d'avancement latérale par rapport au sol $(Va_{sol})_{Lat}$ telle que $V_{Lat} = (Va_{sol})_{Lat}$ lorsque la vitesse d'avancement latérale par rapport au sol $(Va_{sol})_{Lat}$ est strictement comprise entre les secondes entrées minimale *Min2* et maximale *Max2.* Par contre, ce second limiteur 41 délivre en sortie une vitesse latérale $V_{Lat}$ qui est égale à la seconde entrée minimale *Min2*,

telle que $Va_{Lat} = K_1 \times Ny$ - *Offset$_{Lo}$* lorsque cette vitesse d'avancement latérale par rapport au sol $(Va_{sol})_{Lat}$ est inférieure

ou égale à cette seconde entrée minimale *Min2* alors que cette vitesse latérale $V_{Lat}$ est égale à la seconde entrée maximale *Max2*,

telle que $Va_{Lat} = K_1 \times Ny + Offset_{Hi}$ lorsque cette vitesse d'avancement latérale par rapport au sol $(Va_{sol})_{Lat}$ est supérieure ou égale à cette seconde entrée maximale *Max2*.

Un second multiplicateur 45 reçoit en entrée la vitesse latérale $V_{Lat}$ et le second coefficient multiplicateur $K_2$ puis délivre en sortie un second produit de la vitesse latérale $V_{Lat}$ et du second coefficient multiplicateur $K_2$ correspondant à la valeur de correction $B$ de la vitesse angulaire $\dot\psi$ en lacet à appliquer à l'aéronef 10,

telle que $B = K_2 \times Va_{Lat}$.

La vitesse angulaire en lacet $\dot\psi$ est ainsi la somme des valeurs *d'anticipation A* et de correction *B* telle que $\dot\psi$ = A + B, et plus précisément telle que $\dot\psi = \dfrac{G_Y}{V_{Long}} + K_2 \times V_{Lat}$.

De la sorte, le cap $\psi$ à appliquer à l'aéronef 10 lors de la réalisation d'un virage peut être déterminé de façon connue en intégrant par rapport au temps cette vitesse angulaire en lacet $\dot\psi$ par l'intermédiaire d'un troisième composant 16.

Avantageusement, l'utilisation des limiteurs 31,41 permet de limiter les variations des vitesses longitudinale $V_{Long}$ et latérale $Va_{Lat}$ et, par suite, d'assurer une transition progressive entre la coordination sol et la coordination air. De plus, la comparaison entre les vitesses d'avancement de l'aéronef 10 par rapport au sol $(Va_{sol})_{Lat}$ et par rapport à l'air $(Va_{air})_{Lat}$ permet de prendre en compte le vent longitudinal et latéral subi par l'aéronef 10 dans la détermination de la vitesse angulaire en lacet $\dot\psi$ et, par suite du cap $\psi$.

Par ailleurs, la marge *Offset* ainsi que les marges inférieure $Offset_{Lo}$ et supérieure $Offset_{Hi}$ peuvent être variables en fonction de la vitesse d'avancement par rapport à l'air $Va_{air}$ de l'aéronef 10 afin d'assurer une transition progressive entre la coordination sol et la coordination air. Par exemple, ces marges *Offset, Offset$_{Lo}$* et *Offset$_{Hi}$* sont constantes pour des basses vitesses d'avancement de l'aéronef 10 par rapport à l'air $Va_{air}$, et diminuent jusqu'à être nulles pour des hautes vitesses d'avancement de l'aéronef 10 par rapport à l'air $Va_{air}$.

En outre, le second composant 40 peut, comme représenté sur la figure 4, comporter un compensateur 36 positionné en aval du premier multiplicateur 44 afin de prendre en compte un facteur de charge latéral de l'aéronef 10 en vol stationnaire dans le calcul de la vitesse angulaire en lacet $\dot\psi$.

Par ailleurs, le pilote de l'aéronef 10 peut modifier par transparence le cap $\psi$ de l'aéronef 10 en cours de virage, tout en conservant la même trajectoire $T_{sol}$ de vol par rapport au sol afin d'améliorer sa visibilité extérieure ou bien le confort des occupants de l'aéronef 10 par exemple. De fait, la coordination du virage de l'aéronef 10 n'est alors plus assurée et l'exposition de l'aéronef 10 au vent peut également être modifiée. Le procédé de détermination d'une vitesse angulaire en virage selon l'invention permet la conservation de ce cap $\psi$ modifié par le pilote pour des vitesses d'avancement par rapport à l'air $Va_{air}$ inférieures ou égales à une vitesse seuil $V_{seuil}$. Par contre, pour des vitesses d'avancement par rapport à l'air $Va_{air}$ supérieures à cette vitesse seuil $V_{seuil}$, une coordination en virage est assurée par le procédé de détermination d'une vitesse angulaire en virage selon l'invention après que le pilote de l'aéronef 10 a effectué cette modification du cap $\psi$.

De plus, lorsqu'une telle modification du cap $\psi$ est suivie d'une action par transparence du pilote en roulis modifiant l'angle de route $Tk_{sol}$ et, par suite, la trajectoire $T_{sol}$ suivie par l'aéronef 10, le procédé de détermination d'une vitesse angulaire en virage selon l'invention permet de prendre en compte deux situations différentes. Lorsque la modification de l'angle de route $Tk_{sol}$ est inférieure ou égale à un angle seuil, le cap $\psi$ est alors corrigé afin de conserver un écart sensiblement inchangé entre l'angle de route $Tk_{sol}$ et le cap $\psi$ modifié préalablement par le pilote. Lorsque la modification de l'angle de route $Tk_{sol}$ est supérieure à l'angle seuil, le cap $\psi$ est déduit de la vitesse angulaire en lacet $\dot\psi$ déterminée à partir des valeurs *d'anticipation A* et de correction *B* par le procédé de détermination d'une vitesse angulaire en virage selon l'invention.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Notamment, l'aéronef 10 équipé de ce système de détermination d'une vitesse angulaire en virage 1 n'est pas limité à l'aéronef 10 représenté sur la figure 1. Cet aéronef 10 peut par exemple comporter deux rotors principaux ou bien être un hélicoptère hybride.

De plus, le nombre de pales principales 111,112,113 d'un rotor principal 11 ainsi que le nombre de pales secondaires 121,122,123,124 d'un rotor arrière 12 ne sont pas limités à l'exemple d'aéronef 10 représenté sur la figure 1. Un rotor principal 11 ou un rotor arrière 12 peut en effet comporter deux, trois, quatre, cinq pales, voire plus de cinq pales.

**Revendications**

1. Procédé de détermination d'une vitesse angulaire en virage pour un aéronef à voilure tournante (10), ledit aéronef (10) volant selon une trajectoire $T_{sol}$ par rapport au sol avec une vitesse d'avancement $Va$, ladite vitesse d'avancement $Va$ pouvant être déterminée par rapport au sol pour former une vitesse d'avancement par rapport au sol $Va_{sol}$ et par rapport à l'air pour former une vitesse d'avancement par rapport à l'air $Va_{air}$, une direction longitudinale X s'étendant de l'avant dudit aéronef (10) vers l'arrière dudit aéronef (10), une direction d'élévation Z s'étendant de bas en haut perpendiculairement à ladite direction longitudinale X et une direction transversale Y s'étendant de droite à gauche perpendiculairement auxdites directions longitudinale X et d'élévation Z, ledit aéronef (10) comportant :

   - au moins une voilure tournante (11) munie de plusieurs pales dont le pas collectif et le pas cyclique sont variables autour d'un axe de pas, ledit aéronef (10) étant capable d'effectuer des mouvements de rotation autour desdites directions (X,Y,Z) et de translation selon lesdites directions (X,Y,Z), et
   - un pilote automatique (15) générateur d'ordres de commande selon des modes prédéfinis de fonctionnement et selon des consignes de vol, lesdits ordres de commande pouvant provoquer lesdits mouvements dudit aéronef (10) en rotation et/ou en translation selon lesdites directions (X,Y,Z),

   **caractérisé en ce que**

   - on détermine une vitesse longitudinale $V_{Long}$ à utiliser pour déterminer une valeur d'anticipation $A$ d'une vitesse angulaire en lacet $\dot\psi$ dudit aéronef (10) à appliquer lors d'un virage telle que :

     o ladite vitesse longitudinale $V_{Long}$ est égale à une vitesse d'avancement longitudinale par rapport au sol $(Va_{sol})_{Long}$ telle que $V_{Long} = (Va_{sol})_{Long}$ lorsque ladite vitesse d'avancement longitudinale par rapport au sol $(Va_{sol})_{Long}$ est strictement comprise dans un premier intervalle $Int1$ centré sur une vitesse d'avancement longitudinale par rapport à l'air $(Va_{air})_{Long}$ et d'une largeur $D_{int1}$,
     o ladite vitesse longitudinale $V_{Long}$ est égale à une première borne supérieure dudit premier intervalle $Int1$ lorsque ladite vitesse d'avancement longitudinale par rapport au sol $(Va_{sol})_{Long}$ est supérieure ou égale à ladite première borne supérieure, ladite première borne supérieure étant égale à ladite vitesse d'avancement longitudinale par rapport à l'air $(Va_{air})_{Long}$ à laquelle est ajoutée une marge $Offset$ égale à la moitié de ladite largeur $Dint1$,

     telle que $Offset = \frac{D_{int1}}{2}$ et $V_{Long} = (Va_{air})_{Long} + \frac{D_{int1}}{2}$,
     o ladite vitesse longitudinale $V_{Long}$ est égale à une première borne inférieure dudit premier intervalle $Int1$ lorsque ladite vitesse d'avancement longitudinale par rapport au sol $(Va_{sol})_{Long}$ est inférieure ou égale à ladite première borne inférieure, ladite première borne inférieure étant égale à ladite vitesse d'avancement longitudinale par rapport à l'air $(Va_{air})_{Long}$ à laquelle est soustraite ladite marge $Offset$,

     telle que $V_{Long} = (Va_{air})_{Long} - \frac{D_{int1}}{2}$,

   - on détermine ladite valeur d'anticipation $A$ de ladite vitesse angulaire en lacet $(\dot\psi)$ telle que $A = \frac{G_Y}{V_{Long}}$,

   $G_Y$ étant une accélération latérale dudit aéronef (10) commandée par un pilote dudit aéronef (10),
   - on détermine une vitesse latérale $V_{Lat}$ à utiliser pour déterminer une valeur de correction $B$ de ladite vitesse angulaire en lacet $\dot\psi$ à appliquer lors dudit virage telle que :

     ◦ ladite vitesse latérale $V_{Lat}$ est égale à une vitesse d'avancement latérale par rapport au sol $(Va_{sol})_{Lat}$ telle que $V_{Lat} = (Va_{sol})_{Lat}$ lorsque ladite vitesse d'avancement latérale par rapport au sol $(Va_{sol})_{Lat}$ est strictement comprise dans un second intervalle $Int2$ borné d'une part par une seconde borne inférieure égale à un premier produit d'un premier coefficient multiplicateur $K_1$ et d'un facteur de charge latéral $Ny$ dudit aéronef (10) auquel est soustraite une marge inférieure $Offset_{Lo}$ et d'autre part par une seconde borne supérieure égale audit premier produit auquel est ajoutée une marge supérieure $Offset_{Hi}$,
     ◦ ladite vitesse latérale $V_{Lat}$ est égale à ladite seconde borne supérieure lorsque ladite vitesse d'avancement latérale par rapport au sol $(Va_{sol})_{Lat}$ est supérieure ou égale à ladite seconde borne supérieure,
     telle que $Va_{Lat} = K_1 \times Ny + Offset_{Hi}$
     ◦ ladite vitesse latérale $V_{Lat}$ est égale à ladite seconde borne inférieure lorsque ladite vitesse d'avancement latérale par rapport au sol $(Va_{sol})_{Lat}$ est inférieure ou égale à ladite seconde borne inférieure, telle que $Va_{Lat} = K_1 \times Ny - Offset_{Lo}$

- on détermine ladite valeur de correction $B$ de ladite vitesse angulaire en lacet $\dot{\psi}$ telle que $B = K_2 \times V_{Lat}$, $K_2$ étant un second coefficient multiplicateur, et
- on détermine ladite vitesse angulaire en lacet $\dot{\psi}$ afin de poursuivre ladite trajectoire $T_{sol}$ selon ledit virage,

telle que $\dot{\psi} = A + B$.

2. Procédé de détermination d'une vitesse angulaire en virage pour un aéronef à voilure tournante (10) selon la revendication 1,
**caractérisé en ce que** lesdites marge *Offset,* marge supérieure $Offset_{Hi}$ et marge inférieure $Offset_{Lo}$ sont variables et diminuent lorsque ladite vitesse d'avancement par rapport à l'air $Va_{air}$ augmente.

3. Procédé de détermination d'une vitesse angulaire en virage pour un aéronef à voilure tournante (10) selon l'une quelconque des revendications 1 à 2,
**caractérisé en ce que** ladite valeur *Offset* est égale à 20 noeuds (20 kt) lorsque ladite vitesse d'avancement par rapport à l'air $Va_{air}$ est inférieure à 20 noeuds (20 kt).

4. Procédé de détermination d'une vitesse angulaire en virage pour un aéronef à voilure tournante (10) selon l'une quelconque des revendications 1 à 3,
**caractérisé en ce que** lesdites marge supérieure $Offset_{Hi}$ et marge inférieure $Offset_{Lo}$ sont respectivement égales à +20 noeuds (+20 kt) et -20 noeuds (-20 kt) lorsque ladite vitesse d'avancement par rapport à l'air $Va_{air}$ est inférieure à 20 noeuds (20kt).

5. Procédé de détermination d'une vitesse angulaire en virage pour un aéronef à voilure tournante (10) selon l'une quelconque des revendications 1 à 4,
**caractérisé en ce que** lesdites marge *Offset,* marge supérieure $Offset_{Hi}$ et marge inférieure $Offset_{Lo}$ sont nulles lorsque ladite vitesse d'avancement par rapport à l'air $Va_{air}$ est supérieure ou égale à 70 noeuds (70kt).

6. Procédé de détermination d'une vitesse angulaire en virage pour un aéronef à voilure tournante (10) selon l'une quelconque des revendications 1 à 5,
**caractérisé en ce que** ledit facteur de charge latéral $Ny$ est un facteur compensé afin de prendre en compte un facteur de charge dudit aéronef (10) en vol stationnaire.

7. Procédé de détermination d'une vitesse angulaire en virage pour un aéronef à voilure tournante (10) selon l'une quelconque des revendications 1 à 6,
**caractérisé en ce que** lorsque ledit cap $\psi$ est modifié par une action d'un pilote dudit aéronef (10), ledit cap $\psi$ modifié est conservé si ladite vitesse d'avancement par rapport à l'air $Va_{air}$ est inférieure ou égale à une vitesse seuil $V_{seuil}$.

8. Procédé de détermination d'une vitesse angulaire en virage pour un aéronef à voilure tournante (10) selon la revendication 7,
**caractérisé en ce que** ladite vitesse seuil $V_{seuil}$ est variable en fonction de ladite vitesse longitudinale $V_{Long}$.

9. Procédé de détermination d'une vitesse angulaire en virage pour un aéronef à voilure tournante (10) selon la revendication 8,
**caractérisé en ce que** ladite vitesse seuil $V_{seuil}$ est constante lorsque ladite vitesse longitudinale $V_{Long}$ est supérieure ou égale à 30 noeuds (30 kt), puis augmente lorsque ladite vitesse longitudinale $V_{Long}$ diminue jusqu'à 15 noeuds (15 kt) et est constante lorsque ladite vitesse longitudinale $V_{Long}$ est inférieure à 15 noeuds (15 kt).

10. Procédé de détermination d'une vitesse angulaire en virage pour un aéronef à voilure tournante (10) selon l'une quelconque des revendications 1 à 9,
**caractérisé en ce que** lorsqu'une modification dudit cap $\Psi$ suite à une première action d'un pilote dudit aéronef (10) est suivie par une seconde action en roulis dudit pilote entraînant une modification d'un angle de route $Tk_{sol}$ dudit aéronef (10) inférieure ou égale à un angle seuil, ledit cap $\Psi$ est alors modifié afin de conserver un écart inchangé entre ledit angle de route $Tk_{sol}$ et ledit cap $\Psi$.

**11.** Procédé de détermination d'une vitesse angulaire en virage pour un aéronef à voilure tournante (10) selon l'une quelconque des revendications 1 à 9,

**caractérisé en ce que** lorsqu'une modification dudit cap $\psi$ suite à une première action d'un pilote dudit aéronef (10) est suivie par une seconde action en roulis dudit pilote entraînant une modification d'un angle de route $Tk_{sol}$ dudit aéronef (10) supérieure à un angle seuil, ledit cap $\Psi$ est déterminé à partir de ladite vitesse angulaire en lacet $\Psi$ dudit aéronef (10) et des valeurs d'anticipation $A$ et de correction $B$.

**12.** Système de détermination d'une vitesse angulaire en virage (1) pour un aéronef à voilure tournante (10), ledit aéronef (10) volant selon une trajectoire $T_{sol}$ par rapport au sol avec une vitesse d'avancement Va, ladite vitesse d'avancement $Va$ pouvant être déterminée par rapport au sol pour former une vitesse d'avancement par rapport au sol $Va_{sol}$ ou bien par rapport à l'air pour former une vitesse d'avancement par rapport à l'air $Va_{air}$, une direction longitudinale X s'étendant de l'avant dudit aéronef (10) vers l'arrière dudit aéronef (10), une direction d'élévation Z s'étendant de bas en haut perpendiculairement à ladite direction longitudinale X et une direction transversale Y s'étendant de droite à gauche perpendiculairement auxdites directions longitudinale X et d'élévation Z

- ledit aéronef (10) comportant au moins une voilure tournante (11) munie de plusieurs pales dont le pas collectif et le pas cyclique sont variables autour d'un axe de pas, ledit aéronef (10) étant capable d'effectuer des mouvements de rotation autour desdites directions (X,Y,Z) et de translation selon lesdites directions (X,Y,Z),
- un pilote automatique (15) générateur d'ordres de commande selon des modes prédéfinis de fonctionnement, lesdits ordres de commande pouvant provoquer lesdits mouvements dudit aéronef (10) en rotation et/ou en translation selon lesdites directions (X,Y,Z), et
- ledit système de détermination d'une vitesse angulaire en virage (1) comportant

o au moins un composant (30,40), et
o au moins une mémoire (18),

**caractérisé en ce que** ledit système de détermination d'une vitesse angulaire en virage (1) est adapté pour mettre en oeuvre le procédé selon l'une quelconque des revendications 1 à 11, au cours duquel,

- on détermine une vitesse longitudinale $V_{Long}$ à utiliser pour déterminer une valeur d'anticipation $A$ d'une vitesse angulaire en lacet $\psi$ dudit aéronef (10) à appliquer lors d'un virage telle que :

o ladite vitesse longitudinale $V_{Long}$ est égale à une vitesse d'avancement longitudinale par rapport au sol $(Va_{sol})_{Long}$ telle que $V_{Long} = (Va_{sol})_{Long}$ lorsque ladite vitesse d'avancement longitudinale par rapport au sol $(Va_{sol})_{Long}$ est strictement comprise dans un premier intervalle $Int1$ centré sur une vitesse d'avancement longitudinale par rapport à l'air $(Va_{air})_{Long}$ et d'une largeur $D_{int1}$,
○ ladite vitesse longitudinale $V_{Long}$ est égale à une première borne supérieure dudit premier intervalle $Int1$ lorsque ladite vitesse d'avancement longitudinale par rapport au sol $(Va_{sol})_{Long}$ est supérieure ou égale à ladite première borne supérieure, ladite première borne supérieure étant égale à ladite vitesse d'avancement longitudinale par rapport à l'air $(Va_{air})_{Long}$ à laquelle est ajoutée une marge $Offset$ égale à la moitié de ladite largeur $D_{int1}$,

telle que $Offset = \frac{D_{int1}}{2}$ et $V_{Long} = (Va_{air})_{Long} + \frac{D_{int1}}{2}$,

o ladite vitesse longitudinale $V_{Long}$ est égale à une première borne inférieure dudit premier intervalle $Int1$ lorsque ladite vitesse d'avancement longitudinale par rapport au sol $(Va_{sol})_{Long}$ est inférieure ou égale à ladite première borne inférieure, ladite première borne inférieure étant égale à ladite vitesse d'avancement longitudinale par rapport à l'air $(Va_{air})_{Long}$ à laquelle est soustraite ladite marge $Offset$,

telle que $V_{Long} = (Va_{air})_{Long} - \frac{D_{int1}}{2}$,

- on détermine ladite valeur d'anticipation A de ladite vitesse angulaire en lacet $(\dot{\psi})$ telle que $A = \frac{G_Y}{V_{Long}}$,

$G_Y$ étant une accélération latérale dudit aéronef (10) commandée par un pilote dudit aéronef (10),
- on détermine une vitesse latérale $V_{Lat}$ à utiliser pour déterminer une valeur de correction $B$ de ladite vitesse angulaire en lacet $\dot{\psi}$ à appliquer lors dudit virage telle que :

o ladite vitesse latérale $V_{Lat}$ est égale à une vitesse d'avancement latérale par rapport au sol $(Va_{sol})_{Lat}$ telle

que $V_{Lat}$ = $(Va_{sol})_{Lat}$ lorsque ladite vitesse d'avancement latérale par rapport au sol $(Va_{sol})_{Lat}$ est strictement comprise dans un second intervalle *Int2* borné d'une part par une seconde borne inférieure égale à un premier produit d'un premier coefficient multiplicateur $K_1$ et d'un facteur de charge latéral *Ny* dudit aéronef (10) auquel est soustraite une marge inférieure *Offset_Lo* et d'autre part par une seconde borne supérieure égale audit premier produit auquel est ajoutée une marge supérieure *Offset_Hi,*

o ladite vitesse latérale $V_{Lat}$ est égale à ladite seconde borne supérieure lorsque ladite vitesse d'avancement latérale par rapport au sol $(Va_{sol})_{Lat}$ est supérieure ou égale à ladite seconde borne supérieure, telle que $Va_{Lat}$ = $K_1 \times Ny$ + $Offset_{Hi}$.

o ladite vitesse latérale $V_{Lat}$ est égale à ladite seconde borne inférieure lorsque ladite vitesse d'avancement latérale par rapport au sol $(Va_{sol})_{Lat}$ est inférieure ou égale à ladite seconde borne inférieure, telle que $Va_{Lat}$ = $K_1 \times Ny$ - $Offset_{Lo}$.

- on détermine ladite valeur de correction B de ladite vitesse angulaire en lacet $\dot{\psi}$ telle que B = $K_2 \times V_{Lat}$, $K_2$ étant un second coefficient multiplicateur, et

- on détermine ladite vitesse angulaire en lacet $\dot{\psi}$ afin de poursuivre ladite trajectoire $T_{sol}$ selon ledit virage, telle que $\dot{\psi} = A + B$.

**13.** Système de détermination d'une vitesse angulaire en virage (1) pour un aéronef à voilure tournante (10) selon la revendication 12,

**caractérisé en ce que** ledit système de détermination d'une vitesse angulaire en virage (1) comporte un premier composant (30) afin de déterminer ladite valeur d'anticipation *A* de ladite vitesse angulaire $\dot{\psi}$, telle que $A = \frac{G_Y}{V_{Long}}$,

$G_Y$ étant ladite accélération latérale commandée par ledit pilote dudit aéronef (10) et $V_{Long}$ ladite vitesse longitudinale, ledit premier composant (30) comportant un premier limiteur (31), un premier soustracteur (32), un premier additionneur (33) et un diviseur (34),

- ledit premier soustracteur (32) et ledit premier additionneur (33) étant positionnés en amont dudit premier limiteur (31), respectivement en amont d'une première entrée minimale *Min1* et d'une première entrée maximale *Max1* dudit premier limiteur (31), ledit premier soustracteur (32) et ledit premier additionneur (33) recevant en entrée ladite vitesse d'avancement longitudinale par rapport à l'air $(Va_{air})_{Long}$ et ladite marge *Offset* puis délivrant en sortie respectivement une première soustraction et une première addition entre ladite vitesse d'avancement longitudinale par rapport à l'air $(Va_{air})_{Long}$ et ladite marge *Offset,*
- ledit premier limiteur (31) recevant en entrée principale ladite vitesse d'avancement longitudinale par rapport au sol $(Va_{sol})_{Long}$ et en premières entrées minimale *Min1* et maximale *Max1* respectivement ladite première soustraction et ladite première addition puis délivrant en sortie ladite vitesse longitudinale $V_{Long}$ qui est égale à ladite vitesse d'avancement longitudinale par rapport au sol $(Va_{sol})_{Long}$ limitée auxdites premières entrées minimale *Min1* et maximale *Max1* lorsque ladite vitesse d'avancement longitudinale par rapport au sol $(Va_{sol})_{Long}$ est respectivement inférieure ou supérieure auxdites premières entrées minimale *Min1* et maximale *Max1*, et
- ledit diviseur (34) étant positionné en aval dudit premier limiteur (31), ledit diviseur (34) recevant en entrée comme numérateur ladite accélération latérale $G_Y$ dudit aéronef (10) commandée par un pilote dudit aéronef (10) et comme dénominateur ladite vitesse longitudinale $V_{Long}$ puis délivrant en sortie une division de ladite accélération latérale $G_Y$ par ladite vitesse longitudinale $V_{Long}$ correspondant à ladite valeur *d'anticipation A* de ladite vitesse angulaire $\dot{\psi}$ en lacet à appliquer audit aéronef (10).

**14.** Système de détermination d'une vitesse angulaire en virage (1) pour un aéronef à voilure tournante (10) selon l'une quelconque des revendications 12 à 13,

**caractérisé en ce que** ledit système de détermination d'une vitesse angulaire en virage (1) comporte un second composant (40) afin de déterminer ladite valeur de correction *B* de ladite vitesse angulaire $\dot{\psi}$, telle que B = $K_2 \times V_{Lat}$, $V_{Lat}$ étant ladite vitesse latérale et $K_2$ ledit second coefficient multiplicateur, ledit second composant (40) comportant un second limiteur (41), un second soustracteur (42), un second additionneur (43) et deux multiplicateurs (44,45),

- un premier multiplicateur (44) étant positionné en amont du second soustracteur (42) et du second additionneur (43), ledit premier multiplicateur (44) recevant en entrée ledit premier coefficient multiplicateur $K_1$ et ledit facteur de charge latéral *Ny* puis délivrant en sortie un premier produit dudit premier coefficient multiplicateur $K_1$ et dudit facteur de charge latéral *Ny,*

- ledit second soustracteur (42) et ledit second additionneur (43) étant positionnés en amont dudit second limiteur (41), respectivement en amont d'une seconde entrée minimale *Min2* et d'une seconde entrée maximale *Max2* dudit second limiteur (41), ledit second soustracteur (42) et ledit second additionneur (43) recevant en entrée ledit premier produit ainsi que respectivement ladite marge inférieure $Offset_{Lo}$ et ladite marge supérieure $Offset_{Hi}$ puis délivrant en sortie respectivement une seconde soustraction entre ledit premier produit et ladite marge inférieure $Offset_{Lo}$ ainsi qu'une seconde addition entre ledit premier produit et ladite marge supérieure $Offset_{Hi}$,

- ledit second limiteur (41) recevant en entrée principale ladite vitesse d'avancement latérale par rapport au sol $(Va_{sol})_{Lat}$, et en secondes entrées minimale *Min2* et maximale *Max2* respectivement ladite seconde soustraction et ladite seconde addition puis délivrant en sortie ladite vitesse latérale $V_{Lat}$ qui est égale à ladite vitesse d'avancement latérale par rapport au sol $(Va_{sol})_{Lat}$ limitée auxdites secondes entrées minimale *Min2* et maximale *Max2* lorsque ladite vitesse d'avancement latérale par rapport au sol $(Va_{sol})_{Lat}$ est respectivement inférieure ou supérieure auxdites secondes entrées minimale *Min2* et maximale *Max2,* et

- un second multiplicateur (45) étant positionné en aval dudit second limiteur (41) et recevant en entrée ladite vitesse latérale $V_{Lat}$ et ledit second coefficient multiplicateur $K_2$, puis délivrant en sortie un second produit de ladite vitesse latérale $V_{Lat}$ et dudit second coefficient multiplicateur $K_2$ correspondant à ladite valeur de correction *B* de ladite vitesse angulaire $\dot{\psi}$ en lacet à appliquer audit aéronef (10).

15. Système de détermination d'une vitesse angulaire en virage (1) pour un aéronef à voilure tournante (10) selon la revendication 14,
**caractérisé en ce que** ledit second composant (40) comporte un compensateur (46) positionné avant ledit premier multiplicateur (44) afin de prendre en compte un facteur de charge latéral dudit aéronef (10) en vol stationnaire.

**Patentansprüche**

1. Verfahren zur Bestimmung einer Winkelgeschwindigkeit beim Kurvenflug für ein Drehflügelflugzeug (10), wobei das Flugzeug (10) entlang einer Flugbahn $T_{sol}$ relativ zum Boden mit einer Vortriebsgeschwindigkeit *Va* fliegt, wobei die Vortriebsgeschwindigkeit *Va* relativ zum Boden bestimmt sein kann, um eine Vortriebsgeschwindigkeit relativ zum Boden $Va_{sol}$ zu bilden, und relativ zur Luft, um eine Vortriebsgeschwindigkeit relativ zur Luft $Va_{air}$ zu bilden, wobei eine Längsrichtung X sich vom Bug des Flugzeugs (10) zum Heck des Flugzeugs (10) erstreckt, eine Höhenrichtung Z sich von unten nach oben senkrecht zu der Längsrichtung X erstreckt, und eine Querrichtung Y sich von rechts nach links senkrecht zu der Längsrichtung X und der Höhenrichtung Z erstreckt, wobei das Flugzeug (10) aufweist:

- mindestens einen Drehflügel (11) mit mehreren Rotorblättern, deren kollektive und periodische Rotorblattverstellungen um eine Verstellachse veränderbar sind, wobei das Flugzeug (10) in der Lage ist, Rotationsbewegungen um die Richtungen (X, Y, Z) und Translationsbewegungen entlang der Richtungen (X, Y, Z) auszuführen, und

- einen Autopiloten (15), der Steuersignale gemäß vordefinierten Betriebsmodi und gemäß Flugsollwerten erzeugt, wobei die Steuerbefehle die Rotationsbewegungen und/oder Translationsbewegungen um bzw. entlang der Richtungen (X, Y, Z) bewirken können,

**dadurch gekennzeichnet, dass**

- eine Längsgeschwindigkeit $V_{Long}$ bestimmt wird, die zu verwenden ist, um einen Vorschauwert A einer Winkelgeschwindigkeit einer Gierbewegung $\dot{\psi}$ des Flugzeugs (10), die während eines Kurvenflugs anzuwenden ist, zu bestimmen, sodass:

o die Längsgeschwindigkeit $V_{Long}$ gleich einer Längsvortriebsgeschwindigkeit $(Va_{sol})_{Long}$ relativ zum Boden ist, sodass $V_{Long} = (Va_{sol})_{Long}$ gilt, wenn die Längsvortriebsgeschwindigkeit relativ zum Boden $(Va_{sol})_{Long}$ in jedem Fall in einem ersten Intervall *Int1* liegt, das auf einer Längsvortriebsgeschwindigkeit bezüglich der Luft $(Va_{air})_{Long}$ zentriert ist, und eine Weite $D_{int1}$ aufweist,

o die Längsgeschwindigkeit $V_{Long}$ gleich einem ersten oberen Grenzwert des ersten Intervalls *Int1* ist, wenn die Längsvortriebsgeschwindigkeit relativ zum Boden $(Va_{sol})_{Long}$ größer oder gleich dem ersten oberen Grenzwert ist, wobei der erste obere Grenzwert gleich der Längsvortriebsgeschwindigkeit relativ zur Luft

*(Va_air)_Long* ist, auf die eine "*Offset-Marge*" aufgeschlagen ist, die gleich der Hälfte der Weite $D_{int1}$ ist,

sodass $Offset = \frac{D_{int1}}{2}$ und $V_{Long} = (Va_{air})_{Long} + \frac{D_{int1}}{2}$ gilt;

o die Längsgeschwindigkeit $V_{Long}$ gleich einem ersten unteren Grenzwert des ersten Intervalls *Int1* ist, wenn die Längsvortriebsgeschwindigkeit relativ zum Boden $(Va_{sol})_{Long}$ kleiner oder gleich dem ersten unteren Grenzwert ist, wobei der erste untere Grenzwert gleich der Längsvortriebsgeschwindigkeit relativ zur Luft $(Va_{air})_{Long}$ ist, von der die *Offset*-Marge abgezogen ist,

sodass $V_{Long} = (Va_{air})_{Long} - \frac{D_{int1}}{2}$ gilt,

- der Vorschauwert A der Winkelgeschwindigkeit bei einer Gierbewegung ($\dot{\psi}$) bestimmt wird, sodass

$A = \frac{G_Y}{V_{Long}}$ ist,

wobei $G_Y$ eine seitliche Beschleunigung des Flugzeugs (10) ist, die von einem Piloten des Flugzeugs (10) gesteuert wird,
- die seitliche Geschwindigkeit $V_{Lat}$ bestimmt wird, die zu verwenden ist, um einen Korrekturwert B der Winkelgeschwindigkeit bei einer Gierbewegung $\dot{\psi}$, die während des Kurvenflugs anzuwenden ist, zu bestimmen, derart, dass

o die seitliche Geschwindigkeit $V_{Lat}$ gleich einer seitlichen Vortriebsgeschwindigkeit relativ zum Boden $(Va_{sol})_{Lat}$ ist, sodass $V_{Lat} = (Va_{sol})_{Lat}$ gilt, wenn die seitliche Vortriebsgeschwindigkeit relativ zum Boden $(Va_{sol})_{Lat}$ in jedem Fall in einem zweiten Intervall *Int2* enthalten ist, das einerseits durch einen zweiten unteren Grenzwert begrenzt ist, der gleich einem ersten Produkt aus einem ersten Multiplikationskoeffizienten $K_1$ und einem Seitenbelastungsfaktor $N_Y$ des Flugzeugs (10) ist, von dem eine untere Marge $Offset_{Lo}$ abgezogen ist, und andererseits durch einen zweiten oberen Grenzwert, der gleich dem ersten Produkt ist, zu dem eine obere Marge $Offset_{Hi}$ hinzugefügt ist,
o die seitliche Geschwindigkeit $V_{Lat}$ gleich dem zweiten oberen Grenzwert ist, wenn die seitliche Vortriebsgeschwindigkeit relativ zum Boden $(Va_{sol})_{Lat}$ größer oder gleich dem zweiten oberen Grenzwert ist, sodass $Va_{Lat} = K_1 \times Ny + Offset_{Hi}$ gilt,
∘ die seitliche Geschwindigkeit $V_{Lat}$ gleich dem zweiten unteren Grenzwert ist, wenn die seitliche Vortriebsgeschwindigkeit relativ zum Boden $(Va_{sol})_{Lat}$ kleiner oder gleich dem zweiten unteren Grenzwert ist, sodass $Va_{Lat} = K_1 \times Ny - Offset_{Lo}$ gilt,

- der Korrekturwert B der Winkelgeschwindigkeit bei einer Gierbewegung $\dot{\psi}$ berechnet wird, sodass $B = K_2 \times V_{Lat}$ gilt, wobei $K_2$ ein zweiter Multiplikationskoeffizient ist, und
- die Winkelgeschwindigkeit der Gierbewegung $\dot{\psi}$ bestimmt wird, um der Flugbahn $T_{sol}$ gemäß der Kurve zu folgen,
sodass

$$\dot{\psi} = A + B$$

gilt.

2. Verfahren zur Bestimmung einer Winkelgeschwindigkeit beim Kurvenflug für ein Drehflügelflugzeug (10) nach Anspruch 1, **dadurch gekennzeichnet, dass** die *Offset*-Margen, die obere *Offset_Hi*-Marge und die untere *Offset_Lo*-Marge, veränderlich sind und abnehmen, wenn die Vortriebsgeschwindigkeit relativ zur Luft *Va_air* steigt.

3. Verfahren zur Bestimmung einer Winkelgeschwindigkeit beim Kurvenflug für ein Drehflügelflugzeug (10) nach einem der Ansprüche 1 bis 2,
**dadurch gekennzeichnet, dass** der *Offset*-Wert gleich 20 Knoten (20 kt) beträgt, wenn die Vortriebsgeschwindigkeit relativ zur Luft *Va_air* kleiner als 20 Knoten (20 kt) ist.

4. Verfahren zur Bestimmung einer Winkelgeschwindigkeit beim Kurvenflug für ein Drehflügelflugzeug (10) nach einem der Ansprüche 1 bis 3,
**dadurch gekennzeichnet, dass** die obere *Offset_Hi*-Marge und die untere *Offset_Lo*-Marge jeweils +20 Knoten (+20 kt) und -20 Knoten (-20 kt) betragen, wenn die Vortriebsgeschwindigkeit relativ zur Luft $Va_{air}$ kleiner als 20 Knoten (20 kt) ist.

5. Verfahren zur Bestimmung einer Winkelgeschwindigkeit beim Kurvenflug für ein Drehflügelflugzeug (10) nach einem der Ansprüche 1 bis 4,
**dadurch gekennzeichnet, dass** die *Offset*-Margen, die obere *Offset$_{Hi}$-Marge* und die untere *Offset$_{Lo}$*-Marge, Null sind, wenn die Vortriebsgeschwindigkeit relativ zur Luft $Va_{air}$ größer oder gleich 70 Knoten (70 kt) ist.

6. Verfahren zur Bestimmung einer Winkelgeschwindigkeit beim Kurvenflug für ein Drehflügelflugzeug (10) nach einem der Ansprüche 1 bis 5,
**dadurch gekennzeichnet, dass** der Seitenbelastungsfaktor $N_Y$ ein kompensierter Faktor ist, um einen Belastungsfaktor des Flugzeugs (10) im Schwebeflug zu berücksichtigen.

7. Verfahren zur Bestimmung einer Winkelgeschwindigkeit beim Kurvenflug für ein Drehflügelflugzeug (10) nach einem der Ansprüche 1 bis 6,
dadurch gekenntzeichnet, dass, wenn der Kurs $\dot{\psi}$ durch eine Aktion eines Piloten des Flugzeugs (10) verändert wird, der veränderte Kurs $\dot{\psi}$ beibehalten wird, wenn die Vortriebsgeschwindigkeit relativ zur Luft $Va_{air}$ kleiner oder gleich einem Geschwindigkeitsschwellenwert $V_{seuil}$ ist.

8. Verfahren zur Bestimmung einer Winkelgeschwindigkeit beim Kurvenflug für ein Drehflügelflugzeug (10) nach Anspruch 7,
**dadurch gekennzeichnet, dass** der Geschwindigkeitsschwellenwert $V_{seuil}$ in Abhängigkeit von der Längsgeschwindigkeit $V_{Long}$ veränderbar ist.

9. Verfahren zur Bestimmung einer Winkelgeschwindigkeit beim Kurvenflug für ein Drehflügelflugzeug (10) nach Anspruch 8,
**dadurch gekennzeichnet, dass** der Geschwindigkeitsschwellenwert $V_{seuil}$ konstant ist, wenn die Längsgeschwindigkeit $V_{Long}$ größer oder gleich 30 Knoten (30 kt) ist, dann ansteigt, wenn die Längsgeschwindigkeit $V_{Long}$ bis auf 15 Knoten (15 kt) abnimmt, und konstant ist, wenn die Längsgeschwindigkeit $V_{Long}$ kleiner als 15 Knoten (15 kt) ist.

10. Verfahren zur Bestimmung einer Winkelgeschwindigkeit beim Kurvenflug für ein Drehflügelflugzeug (10) nach einem der Ansprüche 1 bis 9,
**dadurch gekennzeichnet, dass**, wenn eine Änderung des Kurses $\dot{\psi}$ infolge einer ersten Aktion eines Piloten des Flugzeugs (10) gefolgt wird von einer zweiten Rollaktion des Piloten, die zu einer Änderung des Winkels der Flugbahn $Tk_{sol}$ des Flugzeugs (10) führt, der kleiner oder gleich einem Winkelschwellenwert ist, der Kurs $\dot{\psi}$ somit verändert wird, um eine unveränderte Abweichung zwischen dem Flugbahnwinkel $Tk_{sol}$ und dem Kurs $\dot{\psi}$ beizubehalten.

11. Verfahren zur Bestimmung einer Winkelgeschwindigkeit beim Kurvenflug für ein Drehflügelflugzeug (10) nach einem der Ansprüche 1 bis 9,
**dadurch gekennzeichnet, dass**, wenn eine Änderung des Kurses $\dot{\psi}$ infolge einer ersten Aktion eines Piloten des Flugzeugs (10) gefolgt wird von einer zweiten Rollaktion des Piloten, die zu einer Änderung des Winkels der Flugbahn $Tk_{sol}$ des Flugzeugs (10) führt, der größer als ein Winkelschwellenwert ist, der Kurs $\dot{\psi}$ bestimmt wird ausgehend von der Winkelgeschwindigkeit bei einer Gierbewegung $\dot{\psi}$ des Flugzeugs (10) und von Vorschauwerten $A$ und Korrekturwerten $B$.

12. System (1) zur Bestimmung einer Winkelgeschwindigkeit beim Kurvenflug für ein Drehflügelflugzeug (10), wobei das Flugzeug (10) entlang einer Flugbahn $T_{sol}$ relativ zum Boden mit einer Vortriebsgeschwindigkeit $Va$ fliegt, wobei die Vortriebsgeschwindigkeit $Va$ relativ zum Boden bestimmt werden kann, um eine Vortriebsgeschwindigkeit relativ zum Boden $Va_{sol}$ zu bilden oder relativ zur Luft, um eine Vortriebsgeschwindigkeit relativ zur Luft $Va_{air}$ zu bilden, wobei sich eine Längsrichtung X vom Bug des Flugzeugs (10) zum Heck des Flugzeugs (10) erstreckt, eine Höhenrichtung Z sich von unten nach oben senkrecht zu der Längsrichtung X erstreckt, und eine Querrichtung Y sich von rechts nach links senkrecht zu der Längsrichtung X und der Höhenrichtung Z erstreckt,

- wobei das Flugzeug (10) mindestens einen Drehflügel (11) aufweist, der mit mehreren Rotorblättern versehen ist, deren kollektive Rotorblattverstellung und deren periodische Rotorblattverstellung um eine Verstellachse veränderbar sind, wobei das Flugzeug (10) in der Lage ist, Rotationsbewegungen um die Richtungen (X, Y, Z) und Translationsbewegungen entlang der Richtungen (X, Y, Z) auszuführen,
- einen Autopiloten (15), der Steuerbefehle gemäß vordefinierten Betriebsmodi erzeugt, wobei die Steuerbefehle die Rotationsbewegung des Flugzeugs (10) um die Richtungen (X, Y, Z) herum und/oder Translationsbewegungen entlang der Richtungen (X, Y, Z) bewirken, und
- wobei das System (1) zur Bestimmung einer Winkelgeschwindigkeit beim Kurvenflug aufweist:

  ◦ mindestens eine Komponente (30, 40) und
  ◦ mindestens einen Speicher (18),

**dadurch gekennzeichnet, dass** das System (1) zur Bestimmung einer Winkelgeschwindigkeit beim Kurvenflug ausgebildet ist, um das Verfahren nach einem der Ansprüche 1 bis 11 auszuführen, bei dem
- eine Längsgeschwindigkeit $V_{Long}$ bestimmt wird, die zu verwenden ist, um einen Vorschauwert A einer Winkelgeschwindigkeit einer Gierbewegung $\dot{\psi}$ des Flugzeugs (10), die während eines Kurvenflugs anzuwenden ist, zu bestimmen, sodass:

  ◦ die Längsgeschwindigkeit $V_{Long}$ gleich einer Längsvortriebsgeschwindigkeit $(Va_{sol})_{Long}$ relativ zum Boden ist, sodass $V_{Long} = (Va_{sol})_{Long}$ gilt, wenn die Längsvortriebsgeschwindigkeit relativ zum Boden $(Va_{sol})_{Long}$ in jedem Fall in einem ersten Intervall *Int1* liegt, das auf einer Längsvortriebsgeschwindigkeit bezüglich der Luft $(Va_{air})_{Long}$ zentriert ist, und eine Weite $D_{int1}$ aufweist,
  ◦ die Längsgeschwindigkeit $V_{Long}$ gleich einem ersten oberen Grenzwert des ersten Intervalls *Int1* ist, wenn die Längsvortriebsgeschwindigkeit relativ zum Boden $(Va_{sol})_{Long}$ größer oder gleich dem ersten oberen Grenzwert ist, wobei der erste obere Grenzwert gleich der Längsvortriebsgeschwindigkeit relativ zur Luft $(Va_{air})_{Long}$ ist, auf die eine "*Offset*-Marge" aufgeschlagen ist, die gleich der Hälfte der Weite $D_{int1}$ ist, sodass

$$Offset = \frac{D_{int1}}{2} \text{ und } V_{Long} = (Va_{air})_{Long} + \frac{D_{int1}}{2} \text{ gilt;}$$

  ◦ die Längsgeschwindigkeit $V_{Long}$ gleich einem ersten unteren Grenzwert des ersten Intervalls *Int1* ist, wenn die Längsvortriebsgeschwindigkeit relativ zum Boden $(Va_{sol})_{Long}$ kleiner oder gleich dem ersten unteren Grenzwert ist, wobei der erste untere Grenzwert gleich der Längsvortriebsgeschwindigkeit relativ zur Luft $(Va_{air})_{Long}$ ist, von der die *Offset*-Marge abgezogen ist,

  sodass $V_{Long} = (Va_{air})_{Long} - \frac{D_{int1}}{2} \text{ gilt,}$ gilt,

- der Vorschauwert A der Winkelgeschwindigkeit bei einer Gierbewegung ($\dot{\Psi}$) bestimmt wird, sodass $A = \frac{G_Y}{V_{Long}}$ ist,
wobei $G_Y$ eine seitliche Beschleunigung des Flugzeugs (10) ist, die von einem Piloten des Flugzeugs (10) gesteuert wird,
- die seitliche Geschwindigkeit $V_{Lat}$ bestimmt wird, die zu verwenden ist, um einen Korrekturwert B der Winkelgeschwindigkeit bei einer Gierbewegung $\dot{\psi}$, die während des Kurvenflugs anzuwenden ist, zu bestimmen, derart, dass

  ◦ die seitliche Geschwindigkeit $V_{Lat}$ gleich einer seitlichen Vortriebsgeschwindigkeit relativ zum Boden $(Va_{sol})_{Lat}$ ist, sodass $V_{Lat} = (Va_{sol})_{Lat}$ gilt, wenn die seitliche Vortriebsgeschwindigkeit relativ zum Boden $(Va_{sol})_{Lat}$ in jedem Fall in einem zweiten Intervall *Int2* enthalten ist, das einerseits durch einen zweiten unteren Grenzwert begrenzt ist, der gleich einem ersten Produkt aus einem ersten Multiplikationskoeffizienten $K_1$ und einem Seitenbelastungsfaktor $N_Y$ des Flugzeugs (10) ist, von dem eine untere Marge $Offset_{Lo}$ abgezogen ist, und andererseits durch einen zweiten oberen Grenzwert, der gleich dem ersten Produkt ist, zu dem eine obere Marge $Offset_{Hi}$ hinzugefügt ist,
  ◦ die seitliche Geschwindigkeit $V_{Lat}$ gleich dem zweiten oberen Grenzwert ist, wenn die seitliche Vortriebsgeschwindigkeit relativ zum Boden $(Va_{sol})_{Lat}$ größer oder gleich dem zweiten oberen Grenzwert ist, sodass $Va_{Lat} = K_1 \times Ny + Offset_{Hi}$ gilt,
  ◦ die seitliche Geschwindigkeit $V_{Lat}$ gleich dem zweiten unteren Grenzwert ist, wenn die seitliche Vortriebsgeschwindigkeit relativ zum Boden $(Va_{sol})_{Lat}$ kleiner oder gleich dem zweiten unteren Grenzwert ist, sodass $Va_{Lat} = K_1 \times Ny - Offset_{Lo}$ gilt,

- der Korrekturwert B der Winkelgeschwindigkeit bei einer Gierbewegung $\dot{\psi}$ berechnet wird, sodass B = $K_2$ x $V_{Lat}$ gilt, wobei $K_2$ ein zweiter Multiplikationskoeffizient ist, und
- die Winkelgeschwindigkeit der Gierbewegung $\dot{\psi}$ bestimmt wird, um der Flugbahn $T_{sol}$ gemäß der Kurve zu folgen,

sodass $\dot{\psi} = A + B$ gilt.

13. System (1) zur Bestimmung einer Winkelgeschwindigkeit beim Kurvenflug für ein Drehflügelflugzeug (10) nach Anspruch 12, **dadurch gekennzeichnet, dass** das System (1) zur Bestimmung einer Winkelgeschwindigkeit beim Kurvenflug eine erste Komponente (30) aufweist zur Bestimmung des Vorschauwertes A der Winkelgeschwindigkeit $\dot{\psi}$, sodass $A = \dfrac{G_Y}{V_{Long}}$ gilt, wobei $G_Y$ die seitliche Beschleunigung ist, die von dem Piloten des Flugzeugs (10) gesteuert wird, und $V_{Long}$ die Längsgeschwindigkeit ist,
wobei die erste Komponente (30) einen ersten Begrenzer (31), ein erstes Subtraktionselement (32), ein erstes Additionselement (33) und ein Divisionselement (34) aufweist,

- wobei das erste Subtraktionselement (32) und das erste Additionselement (33) vor dem ersten Begrenzer (31), jeweils vor einem ersten minimalen Eingang *Min1* und einem ersten maximalen Eingang *Max1* des ersten Begrenzers (31) positioniert sind, wobei das erste Subtraktionselement (32) und das erste Additionselemente (33) an ihrem Eingang die Längsvortriebsgeschwindigkeit relativ zur Luft *(Va$_{air}$)$_{Long}$* und die *Offset*-Marge empfangen und jeweils am Ausgang eine erste Subtraktion bzw. eine erste Addition zwischen der Längsvortriebsgeschwindigkeit relativ zur Luft *(V$_{air}$)$_{Long}$* und der *Offset*-Marge liefern,
- wobei der erste Begrenzer (31) am Haupteingang die Längsvortriebsgeschwindigkeit relativ zum Boden *(V$\alpha_{sol}$)$_{Long}$* und an dem ersten minimalen Eingang *Min1* und dem ersten maximalen Eingang *Max1* jeweils die erste Subtraktion bzw. die erste Addition empfängt, und am Ausgang die Längsvortriebsgeschwindigkeit $V_{Long}$ liefert, die gleich der Längsvortriebsgeschwindigkeit relativ zum Boden *(V$\alpha_{sol}$)$_{Long}$* ist, die an dem ersten minimalen Eingang *Min1* und dem ersten maximalen Eingang *Max1* begrenzt ist, wenn die Längsvortriebsgeschwindigkeit relativ zum Boden *(V$\alpha$-$_{sol}$)$_{Long}$* jeweils kleiner oder größer als der erste minimale Eingang *Min1* und der erste maximale Eingang *Max1* ist, und
- wobei das Divisionselement (34) hinter dem ersten Begrenzer (31) angeordnet ist, wobei das Divisionselement (34) am Eingang als Zähler die seitliche Beschleunigung $G_Y$ des Flugzeugs (10) empfängt, die von dem Piloten des Flugzeugs (10) gesteuert wird, und als Nenner die Längsgeschwindigkeit $V_{Long}$, und am Ausgang eine Division der seitlichen Beschleunigung $G_Y$ durch die Längsteschwindigkeit $V_{Long}$ liefert, die dem Vorschauwert A der Winkelgeschwindigkeit $\dot{\psi}$ der Gierbewegung entspricht, die auf das Flugzeug (10) anzuwenden ist.

14. System (1) zur Bestimmung einer Winkelgeschwindigkeit beim Kurvenflug für ein Drehflügelflugzeug (10) nach einem der Ansprüche 12 bis 13,
**dadurch gekennzeichnet, dass** das System (1) zur Bestimmung einer Winkelgeschwindigkeit beim Kurvenflug eine zweite Komponente (40) aufweist zum Bestimmen des Korrekturwertes B der Winkelgeschwindigkeit $\dot{\psi}$, sodass B = $K_2$ x $V_{Lat}$ gilt,
wobei $V_{Lat}$ die seitliche Geschwindigkeit und $K_2$ der zweite Multiplikationskoeffizient ist,
wobei die zweite Komponente (40) einen zweiten Begrenzer (41) und ein zweites Subtraktionselement (42), ein zweites Additionselement (43) und zwei Multiplikationselemente (44, 45) aufweist,

- wobei ein erstes Multiplikationselement (44) vor dem zweiten Subtraktionselement (42) und vor dem zweiten Additionselement (43) angeordnet ist, wobei das erste Multiplikationselement (44) am Eingang den ersten Multiplikationskoeffizienten $K_1$ und den Seitenbelastungsfaktor $N_Y$ empfängt und am Ausgang ein erstes Produkt aus dem ersten Multiplikationskoeffizienten $K_1$ und dem Seitenbelastungsfaktor $N_Y$ ausgibt,
- wobei das zweite Subtraktionselement (42) und das zweite Additionselement (43) vor dem zweiten Begrenzer (41) jeweils vor einem zweiten minimalen Eingang *Min2* und einem zweiten maximalen Eingang *Max2* des zweiten Begrenzers (41) positioniert sind, wobei das zweite Subtraktionselement (42) und das zweite Additionselement (43) am Eingang das erste Produkt sowie jeweils die untere *Offset$_{Lo}$*-Marge und die obere *Offset$_{Hi}$*-Marge empfangen, und dann jeweils am Ausgang eine zweite Subtraktion zwischen dem ersten Produkt und der unteren *Offset$_{Lo}$*-Marge, sowie eine zweite Addition des ersten Produkts und der oberen *Offset$_{Hi}$*-Marge liefern,
- wobei der zweite Begrenzer (41) am Haupteingang die seitliche Vortriebsgeschwindigkeit relativ zum Boden *(Va$_{sol}$)$_{Lat}$* und an dem zweiten minimalen Eingang *Min2* bzw. dem zweiten maximalen Eingang *Max2* jeweils die zweite Subtraktion und die zweite Addition empfängt, und am Ausgang die begrenzte seitliche Vortriebs-geschwindigkeit relativ zum Boden *(Va$_{sol}$)$_{Lat}$* an den zweiten minimalen Eingang *Min2* und den zweiten maximalen Eingang *Max2* liefert, wenn die seitliche Vortriebsgeschwindigkeit relativ zum Boden (Va$_{sol}$)$_{Lat}$ jeweils kleiner oder größer als der zweite minimale Eingang *Min2* und der zweite maximale Eingang *Max2* ist, und

- wobei ein zweites Multiplikationselement (45) hinter dem zweiten Begrenzer (41) positioniert ist und am Eingang die seitliche Geschwindigkeit *V$_{Lat}$* und den zweiten Multiplikationskoeffizienten *K$_2$* empfängt, und am Ausgang ein zweites Produkt aus der seitlichen Geschwindigkeit *V$_{Lat}$* und dem zweiten Multiplikationskoeffizienten *K$_2$* liefert, welches dem Korrekturwert B der Winkelgeschwindigkeit $\dot{\psi}$ bei einer Gierbewegung entspricht, der auf das Flugzeug (10) anzuwenden ist.

**15.** System (1) zur Bestimmung einer Winkelgeschwindigkeit beim Kurvenflug für ein Drehflügelflugzeug (10) nach Anspruch 14, **dadurch gekennzeichnet, dass** die zweite Komponente (40) einen Kompensator (46) aufweist, der vor dem ersten Multiplikationselement (44) angeordnet ist, um einen Seitenbelastungsfaktor des Flugzeugs (10) im Schwebeflug zu berücksichtigen.

## Claims

**1.** Method for determining an angular speed in turning for a rotary wing aircraft (10), said aircraft (10) flying along a trajectory *T$_{sol}$* relative to the ground at a speed of advance *V$\alpha$,* said speed of advance *Va* being able to be determined relative to the ground in order to form a speed of advance relative to the ground *V$\alpha_{sol}$* and relative to the air in order to form a speed of advance relative to the air *V$\alpha_{air}$,* a longitudinal direction X extending from the front of said aircraft (10) to the rear of said aircraft (10), an elevation direction Z extending from the bottom upwards perpendicularly to said longitudinal direction X and a transverse direction Y extending from right to left perpendicularly to said longitudinal and elevation directions X and Z, said aircraft (10) comprising:

- at least one rotary wing (11) provided with a plurality of blades, the collective pitch and the cyclic pitch of which are variable about a pitch axis, said aircraft (10) being capable of performing movements of rotation about said directions (X, Y, Z) and of translation along said directions (X, Y, Z), and
- an autopilot (15) for generating control orders according to predefined modes of operation and according to flight setpoints, said control orders being capable of causing said movements of said aircraft (10) in rotation and/or in translation along said directions (X, Y, Z),

**characterised in that**

- a longitudinal speed *V$_{Long}$* to be used for determining an anticipation value A of an angular speed in yaw $\dot{\psi}$ of said aircraft (10) to be applied during a turn is determined such that:

  ◦ said longitudinal speed *V$_{Long}$* is equal to a longitudinal speed of advance relative to the ground (*V$\alpha_{sol}$)$_{Long}$* such that *V$_{Long}$* = (*V$\alpha_{sol}$)$_{Long}$* when said longitudinal speed of advance relative to the ground (*V$\alpha_{sol}$)$_{Long}$* is strictly comprised within a first interval *Int1* centred on a longitudinal speed of advance relative to the air (*V$\alpha_{air}$)$_{Long}$* and of a width *D$_{int1}$,*
  o said longitudinal speed *V$_{Long}$* is equal to a first upper bound of said first interval *Int1* when said longitudinal speed of advance relative to the ground (*V$\alpha_{sol}$)$_{Long}$* is greater than or equal to said first upper bound, said first upper bound being equal to said longitudinal speed of advance relative to the air (*V$\alpha_{air}$)$_{Long}$* to which is added a margin Offset equal to half of said width *D$_{int1}$,*

  such that $Offset = \frac{D_{int1}}{2}$ and $V_{Long} = (Va_{air})_{Long} + \frac{D_{int1}}{2}$,

  ◦ said longitudinal speed *V$_{Long}$* is equal to a first lower bound of said first interval *Int1* when said longitudinal speed of advance relative to the ground (*V$\alpha_{sol}$)$_{Long}$* is less than or equal to said first lower bound, said first lower bound being equal to said longitudinal speed of advance relative to the air (*V$\alpha_{air}$)$_{Long}$* from which said margin Offset is subtracted,

  such that $V_{Long} = (Va_{air})_{Long} - \frac{D_{int1}}{2}$,

- said anticipation value A of said angular speed in yaw

($\dot{\psi}$) is determined such that $A = \dfrac{Gy}{V_{Long}}$,

$Gy$ being a lateral acceleration of said aircraft (10) controlled by a pilot of said aircraft (10),

- a lateral speed $V_{Lat}$ to be used for determining a correction value $B$ of said angular speed in yaw $\dot{\Psi}$ to be applied during said turn is determined such that:

  ∘ said lateral speed $V_{Lat}$ is equal to a lateral speed of advance relative to the ground $(V\alpha_{sol})_{Lat}$ such that $V_{Lat} = (V\alpha_{sol})_{Lat}$ when said lateral speed of advance relative to the ground $(Va_{sol})_{Lat}$ is strictly comprised within a second interval Int2 bounded on the one hand by a second lower bound equal to a first product of a first multiplier coefficient $K_1$ and of a lateral load factor $Ny$ of said aircraft (10) from which is subtracted a low margin $Offset_{Lo}$ and on the other hand by a second upper bound equal to said first product to which is added a high margin $Offset_{Hi}$,
  ∘ said lateral speed $V_{Lat}$ is equal to said second upper bound when said lateral speed of advance relative to the ground $(V\alpha_{sol})_{Lat}$ is greater than or equal to said second upper bound,
  such that $Va_{Lat} = K_1 \times Ny + Offset_{Hi}$,
  ∘ said lateral speed $V_{Lat}$ is equal to said second lower bound when said lateral speed of advance relative to the ground $(V\alpha_{sol})_{Lat}$ is less than or equal to said second lower bound,
  such that $Va_{Lat} = K_1 \times Ny - Offset_{Lo}$,

- said correction value B of said angular speed in yaw $\dot{\psi}$ is determined such that $B = K_2 \times V_{Lat}$, $K_2$ being a second multiplier coefficient, and
- said angular speed in yaw $\dot{\psi}$ is determined so as to follow said trajectory $T_{sol}$ according to said turn,

such that $\dot{\psi} = A + B.$

2. Method for determining an angular speed in turning for a rotary wing aircraft (10) according to claim 1, **characterised in that** said margin *Offset,* high margin $Offset_{Hi}$ and low margin $Offset_{Lo}$ are variable and decrease when said speed of advance relative to the air $V\alpha_{air}$ increases.

3. Method for determining an angular speed in turning for a rotary wing aircraft (10) according to any one of claims 1 to 2, **characterised in that** said value *Offset* is equal to 20 knots (20 kt) when said speed of advance relative to the air $V\alpha_{air}$ is less than 20 knots (20 kt).

4. Method for determining an angular speed in turning for a rotary wing aircraft (10) according to any one of claims 1 to 3, **characterised in that** said high margin $Offset_{Hi}$ and low margin $Offset_{Lo}$ are respectively equal to +20 knots (+20 kt) and -20 knots (-20 kt) when said speed of advance relative to the air $V\alpha_{air}$ is less than 20 knots (20kt).

5. Method for determining an angular speed in turning for a rotary wing aircraft (10) according to any one of claims 1 to 4, **characterised in that** said margin *Offset*, high margin $Offset_{Hi}$ and low margin $Offset_{Lo}$ are zero when said speed of advance relative to the air $V\alpha_{air}$ is greater than or equal to 70 knots (70kt).

6. Method for determining an angular speed in turning for a rotary wing aircraft (10) according to any one of claims 1 to 5, **characterised in that** said lateral load factor $Ny$ is a compensated factor in order to take account of a load factor of said aircraft (10) in hovering flight.

7. Method for determining an angular speed in turning for a rotary wing aircraft (10) according to any one of claims 1 to 6, **characterised in that** when said heading $\dot{\psi}$ is modified by an action of a pilot of said aircraft (10), said modified heading $\dot{\psi}$ is conserved if said speed of advance relative to the air $V\alpha_{air}$ is less than or equal to a threshold speed $V_{threshold}$.

8. Method for determining an angular speed in turning for a rotary wing aircraft (10) according to claim 7, **characterised in that** said threshold speed $V_{threshold}$ is variable as a function of said longitudinal speed $V_{Long}$.

9. Method for determining an angular speed in turning for a rotary wing aircraft (10) according to claim 8, **characterised in that** said threshold speed $V_{threshold}$ is constant when said longitudinal speed $V_{Long}$ is greater than or equal to 30 knots (30 kt), then increases when said longitudinal speed $V_{Long}$ decreases down to 15 knots (15 kt) and is constant when said longitudinal speed $V_{Long}$ is less than 15 knots (15 kt).

**10.** Method for determining an angular speed in turning for a rotary wing aircraft (10) according to any one of claims 1 to 9, **characterised in that** when a modification of said heading $\psi$ as a result of a first action of a pilot of said aircraft (10) is followed by a second action in roll of said pilot leading to a modification of a course angle $Tk_{sol}$ of said aircraft (10) less than or equal to a threshold angle, said heading $\psi$ is then modified in order to conserve an unchanged difference between said course angle $Tk_{sol}$ and said heading $\psi$.

**11.** Method for determining an angular speed in turning for a rotary wing aircraft (10) according to any one of claims 1 to 9, **characterised in that** when a modification of said heading $\psi$ as a result of a first action of a pilot of said aircraft (10) is followed by a second action in roll of said pilot leading to a modification of a course angle $Tk_{sol}$ of said aircraft (10) greater than a threshold angle, said heading $\psi$ is determined from said angular speed in yaw $\dot{\psi}$ of said aircraft (10) and from the anticipation value $A$ and the correction value B.

**12.** System for determining an angular speed in turning (1) for a rotary wing aircraft (10), said aircraft (10) flying along a trajectory $T_{sol}$ relative to the ground at a speed of advance $V\alpha$ said speed of *advance V*$\alpha$ being able to be determined relative to the ground in order to form a speed of advance relative to the ground $Va_{sol}$ or else relative to the air in order to form a speed of advance relative to the air $V\alpha_{air}$, a longitudinal direction X extending from the front of said aircraft (10) to the rear of said aircraft (10), an elevation direction Z extending from the bottom upwards perpendicularly to said longitudinal direction X and a transverse direction Y extending from right to left perpendicularly to said longitudinal and elevation directions X and Z,

- said aircraft (10) comprising at least one rotary wing (11) provided with a plurality of blades, the collective pitch and the cyclic pitch of which are variable about a pitch axis, said aircraft (10) being capable of performing movements of rotation about said directions (X,Y,Z) and of translation along said directions (X,Y,Z),
- an autopilot (15) for generating control orders according to predefined modes of operation, said control orders being capable of causing said movements of said aircraft (10) in rotation and/or in translation along said directions (X,Y,Z), and
- said system for determining an angular speed in turning (1) comprising

  ∘ at least one component (30,40), and
  ∘ at least one memory (18),

**characterised in that** said system for determining an angular speed in turning (1) is adapted to perform the method according to any one of claims 1 to 11, during which,

- a longitudinal speed $V_{Long}$ to be used for determining an anticipation value A of an angular speed in yaw $\dot{\psi}$ of said aircraft (10) to be applied during a turn is determined such that:

  o said longitudinal speed $V_{Long}$ is equal to a longitudinal speed of advance relative to the ground $(V\alpha_{sol})_{Long}$ such that $V_{Long} = (V\alpha_{sol})_{Long}$ when said longitudinal speed of advance relative to the ground $(V\alpha_{sol})_{Long}$ is strictly comprised within a first interval *Int1* centred on a longitudinal speed of advance relative to the air $(V\alpha_{air})_{Long}$ and of a width $D_{int1}$,
  ∘ said longitudinal speed $V_{Long}$ is equal to a first upper bound of said first interval *Int1* when said longitudinal speed of advance relative to the ground $(V\alpha_{sol})_{Long}$ is greater than or equal to said first upper bound, said first upper bound being equal to said longitudinal speed of advance relative to the air $(V\alpha_{air})$ Long to which is added a margin *Offset* equal to half of said width $D_{int1}$,

  such that $Offset = \frac{D_{int1}}{2}$ and $V_{Long} = (Va_{air})_{Long} + \frac{D_{int1}}{2}$,

  o said longitudinal speed $V_{Long}$ is equal to a first lower bound of said first interval *Int1* when said longitudinal speed of advance relative to the ground $(V\alpha_{sol})_{Long}$ is less than or equal to said first lower bound, said first lower bound being equal to said longitudinal speed of advance relative to the air $(V\alpha_{air})_{Long}$ from which said margin *Offset* is subtracted,

  such that $V_{Long} = (Va_{air})_{Long} - \frac{D_{int1}}{2}$,

- said anticipation value A of said angular speed in yaw

($\dot{\psi}$) is determined such that $\dfrac{G_Y}{V_{Long}}$,

$G_Y$ being a lateral acceleration of said aircraft (10) controlled by a pilot of said aircraft (10),

- a lateral speed $V_{Lat}$ to be used for determining a correction value $B$ of said angular speed in yaw $\dot{\psi}$ to be applied during said turn is determined such that:

 o said lateral speed $V_{Lat}$ is equal to a lateral speed of advance relative to the ground $(V\alpha_{sol})_{Lat}$ such that $V_{Lat} = (V\alpha_{sol})_{Lat}$ when said lateral speed of advance relative to the ground $(V\alpha_{sol})_{Lat}$ is strictly comprised within a second interval $Int2$ bounded on the one hand by a second lower bound equal to a first product of a first multiplier coefficient $K_1$ and of a lateral load factor $Ny$ of said aircraft (10) from which is subtracted a low margin $Offset_{Lo}$ and on the other hand by a second upper bound equal to said first product to which is added a high margin $Offset_{Hi}$,
 ∘ said lateral speed $V_{Lat}$ is equal to said second upper bound when said lateral speed of advance relative to the ground $(V\alpha_{sol})_{Lat}$ is greater than or equal to said second upper bound,
 such that $Va_{Lat} = K_1 \times Ny + Offset_{Hi}$,
 ∘ said lateral speed $V_{Lat}$ is equal to said second lower bound when said lateral speed of advance relative to the ground $(V\alpha_{sol})_{Lat}$ is less than or equal to said second lower bound,
 such that $Va_{Lat} = K_1 \times Ny - Offset_{Lo}$,

- said correction value B of said angular speed in yaw $\dot{\psi}$ is determined such that $B = K_2 \times V_{Lat}$, $K_2$ being a second multiplier coefficient, and
- said angular speed in yaw $\dot{\psi}$ is determined so as to follow said trajectory $T_{sol}$ according to said turn,

such that $\dot{\psi} = A + B.$

13. System for determining an angular speed in turning (1) for a rotary wing aircraft (10) according to claim 12, **characterised in that** said system for determining an angular speed in turning (1) comprises a first component (30) in order to determine said anticipation value A of said angular speed $\dot{\psi}$, such that $A = \dfrac{G_Y}{V_{Long}}$,

$G_Y$ being said lateral acceleration controlled by said pilot of said aircraft (10) and $V_{Long}$ said longitudinal speed,

said first component (30) comprising a first limiter (31), a first subtracter (32), a first adder (33) and a divider (34),

- said first subtracter (32) and said first adder (33) being positioned upstream from said first limiter (31), respectively upstream from a minimum first input $Min1$ and from a maximum first input $Max1$ of said first limiter (31), said first subtracter (32) and said first adder (33) receiving as input said longitudinal speed of advance relative to the air $(V\alpha_{air})_{Long}$ and said margin $Offset$ then delivering as output respectively a first subtraction and a first addition between said longitudinal speed of advance relative to the air $(V\alpha_{air})_{Long}$ and said margin $Offset$,
- said first limiter (31) receiving as main input said longitudinal speed of advance relative to the ground $(Va_{sol})_{Long}$, and as minimum and maximum first inputs $Min1$ and $Max1$ respectively said first subtraction and said first addition then delivering as output said longitudinal speed $V_{Long}$ which is equal to said longitudinal speed of advance relative to the ground $(V\alpha_{sol})_{Long}$ limited to said minimum and maximum first inputs $Min1$ and $Max1$ when said longitudinal speed of advance relative to the ground $(V\alpha_{sol})_{Long}$ is respectively less than or greater than said minimum and maximum first inputs $Min1$ and $Max1$, and
- said divider (34) being positioned downstream from said first limiter (31), said divider (34) receiving as input as numerator said lateral acceleration $G_Y$ of said aircraft (10) controlled by a pilot of said aircraft (10) and as denominator said longitudinal speed $V_{Long}$ then delivering as output a division of said lateral acceleration $G_Y$ by said longitudinal speed $V_{Long}$ corresponding to said anticipation value A of said angular speed $\dot{\psi}$ in yaw to be apply to said aircraft (10).

14. System for determining an angular speed in turning (1) for a rotary wing aircraft (10) according to any one of claims 12 to 13, **characterised in that** said system for determining an angular speed in turning (1) comprises a second component (40) in order to determine said correction value B of said angular speed $\dot{\psi}$, such that $B = K_2 \times V_{Lat}$, $V_{Lat}$ being said lateral speed and $K_2$ said second multiplier coefficient, said second component (40) comprising a second limiter (41), a second subtracter (42), a second adder (43) and two multipliers (44,45),

- a first multiplier (44) being positioned upstream from the second subtracter (42) and from the second adder (43), said first multiplier (44) receiving as input said first multiplier coefficient $K_1$ and said lateral load factor $Ny$ then delivering as output a first product of said first multiplier coefficient $K_1$ and of said lateral load factor $Ny$,

- said second subtracter (42) and said second adder (43) being positioned upstream from said second limiter (41), respectively upstream from a minimum second input $Min2$ and from a maximum second input $Max2$ of said second limiter (41), said second subtracter (42) and said second adder (43) receiving as input said first product as well as respectively said low margin $Offset_{Lo}$ and said high margin $Offset_{Hi}$ then delivering as output respectively a second subtraction between said first product and said low margin $Offset_{Lo}$ as well as a second addition between said first product and said high margin $Offset_{Hi}$,

- said second limiter (41) receiving as main input said lateral speed of advance relative to the ground $(V\alpha_{sol})_{Lat}$, and as minimum and maximum second inputs $Min2$ and $Max2$ respectively said second subtraction and said second addition then delivering as output said lateral speed $V_{Lat}$ which is equal to said lateral speed of advance relative to the ground $(V\alpha_{sol})_{Lat}$ limited to said minimum and maximum second inputs $Min2$ and $Max2$ when said lateral speed of advance relative to the ground $(V\alpha_{sol})_{Lat}$ is respectively less than or greater than said minimum and maximum second inputs $Min2$ and $Max2$, and

- a second multiplier (45) being positioned downstream from said second limiter (41) and receiving as input said lateral speed $V_{Lat}$ and said second multiplier coefficient $K_2$, then delivering as output a second product of said lateral speed $V_{Lat}$ and of said second multiplier coefficient $K_2$ corresponding to said correction value B of said angular speed $\dot{\psi}$ in yaw to be applied to said aircraft (10).

15. System for determining an angular speed in turning (1) for a rotary wing aircraft (10) according to claim 14, **characterised in that** said second component (40) comprises a compensator (46) positioned before said first multiplier (44) in order to take account of a lateral load factor of said aircraft (10) in hovering flight.

**Fig.1**

# Fig.3

# Fig.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1347243
- FR 2991664
- US 5001646 A
- WO 9534029 A
- US 5213283 A
- WO 2012134447 A
- FR 2777535
- WO 2012134460 A
- WO 2012096668 A
- FR 2814433
- WO 2013012408 A